(19) Europäisches Patentamt
European Patent Office
Office européen des brevets

(11) **EP 3 905 409 A1**

(12) **EUROPÄISCHE PATENTANMELDUNG**

(43) Veröffentlichungstag:
**03.11.2021 Patentblatt 2021/44**

(51) Int Cl.:
**H01M 10/0525** (2010.01)   **C01G 25/02** (2006.01)
**H01M 10/0562** (2010.01)   **H01M 4/62** (2006.01)
**H01G 11/00** (2013.01)

(21) Anmeldenummer: **20214458.0**

(22) Anmeldetag: **16.12.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **29.04.2020 DE 102020111624**

(71) Anmelder: **Schott AG**
**55122 Mainz (DE)**

(72) Erfinder:
• **LEUKEL, Sebastian**
**55128 Mainz (DE)**

• **SCHNEIDER, Meike**
**65232 Taunusstein (DE)**
• **ROTERS, Andreas**
**55118 Mainz (DE)**
• **SCHUHMACHER, Jörg**
**70806 Kornwestheim (DE)**
• **SCHMIDTBAUER, Wolfgang**
**55126 Mainz (DE)**
• **RÜDINGER, Bernd**
**55286 Wörrstadt (DE)**

(74) Vertreter: **Sawodny, Michael-Wolfgang**
**Dreiköniggasse 10**
**89073 Ulm (DE)**

(54) **ALUMINIUM-DOTIERTER LITHIUMIONENLEITER AUF BASIS EINER GRANATSTRUKTUR**

(57)    Die Erfindung betrifft einen Aluminium-dotierten Lithiumionenleiter auf Basis einer Granatstruktur, umfassend Lanthan, insbesondere ein Aluminium-dotiertes Lithiumlanthanzirkonat (LLZO), wobei dieser/dieses mit mindestens einem dreiwertigen Ion $M^{3+}$ auf dem Lanthanplatz codotiert ist, wobei das dreiwertige Ion $M^{3+}$ einen Ionenradius aufweist, der kleiner ist als der von $La^{3+}$, und ein im Vergleich zu einer stöchiometrischen Granatstruktur höherer Lithium-Gehalt vorliegt, mit der Maßgabe, dass, wenn $M^{3+}$ Yttrium ist, ein weiteres dreiwertiges Ion $M^{3+}$, welches von $Y^{3+}$ verschieden ist und einen Ionenradius aufweist, der kleiner ist als der von $La^{3+}$, auf dem Lanthanplatz codotiert ist. Es wird eine Codotierungsstrategie durchgeführt, bei der eine Dotierung auf dem Lanthanplatz mit Ionen gleicher Valenz, aber kleinerem Durchmesser, die Änderung der Gittergeometrie zur kubischen Modifikation hin bewirkt. Dies führt zu einer Stabilisierung der kubischen Kristallmodifikation, die auch bei überstöchiometrischen Mengen an Lithium vorliegt.

Fig.1

EP 3 905 409 A1

Printed by Jouve, 75001 PARIS (FR)

**Beschreibung**

Die vorliegende Erfindung bezieht sich auf einen Aluminium-dotierten Lithiumionenleiter auf Basis einer Granatstruktur, ein Verfahren zu dessen Herstellung sowie dessen Verwendung.

**Hintergrund des Standes der Technik**

In der Batterietechnologie haben sich in den letzten Jahren die auf Lithiumionen basierenden Batteriesysteme zunehmend durchgesetzt. Diese zeichnen sich insbesondere durch ihre hohe Energiedichte und zu erwartende lange Haltbarkeit aus, so dass effizientere Batteriekonfigurationen möglich werden. Das hohe chemische Reaktionsvermögen und die geringe Masse der Lithiumionen sowie deren hohe Beweglichkeit spielen hierbei eine zentrale Rolle. Für die Entwicklung von Festkörper-Lithiumionenleitern besteht daher großes Interesse.

Bei Festkörperbatterien oder Festkörperakkumulatoren bestehen beide Elektroden und der Elektrolyt aus festem Material. In Lithiumionenbatterien oder -akkumulatoren liegen in allen drei Phasen der elektrochemischen Zelle Lithium-Verbindungen vor, d.h., die negative Elektrode, die positive Elektrode sowie der Elektrolyt enthalten Lithiumionen. Der generelle Vorteil von Lithium-basierten Festkörperbatterien oder - akkumulatoren ist dabei, dass ein Flüssigelektrolyt, der häufig leicht entzündlich oder giftig ist und zur Zersetzung neigt, ersetzt und damit eine Verbesserung der Sicherheit und Zuverlässigkeit von Lithium-basierten Batterien möglich wird.

Lithiumionenleiter, die in einer Granat- oder granatartigen Struktur kristallisieren, die auch als Lithium-Granate bezeichnet werden, wie Lithiumlanthanzirkonat (LLZO), sind bedingt durch ihre hohe Ionenleitfähigkeit bei Raumtemperatur vielversprechende Materialien für den Einsatz als Festelektrolyte in Feststoff-Lithiumionen-Batterien oder All-Solid-State-Batterien (ASSB) (Murugan R., Thangadurai V., Weppner W., Fast lithium ion conduction in garnet-type $Li_7La_3Zr_2O_{12}$, Angew. Chem. Int. Ed. 46, 2007, 7778-7781).

Die Synthese dieser Materialien kann über verschiedene Verfahren erfolgen: Mit Hilfe einer Festkörperreaktion aus einer Mischung von Oxiden, Carbonaten oder Hydroxiden, über eine Sol-Gel-Synthese, basierend auf der Hydrolyse und Kondensation von Nitraten und Alkoxiden, mit Spray-Pyrolyse oder aus der Gasphase bzw. aus Plasma (Sputter-Prozess oder CVD).

Obwohl es sich bei der Festkörperreaktion eigentlich um einen einfachen Syntheseweg handeln sollte, hat dieses Verfahren in der praktischen Anwendung wesentliche Nachteile. Die benötigten hohen Sintertemperaturen und langen Verweildauern bei diesen hohen Temperaturen führen zu einer Verdampfung von Lithium, was eine präzise Kontrolle der Stöchiometrie erschwert. Zudem stellt diese Verdampfung ein Problem für die Standzeiten, der im Prozess verwendeten Öfen und anderer Hilfsmittel dar, da Lithium mit zahlreichen Metallen niedrig schmelzende Legierungen bilden kann.

Ein weiteres Problem stellt die Bildung von Inhomogenitäten im Produkt dar, die häufig durch aufwändige weitere Prozesse, wie erneutes Aufmahlen und wiederholte Sinterschritte, ausgeglichen werden müssen. Zudem wird die Bildung von Fremdphasen beobachtet.

Lösungsmittel-basierte Herstellungsprozesse, wie z.B. Sol-Gel-Verfahren oder Spray-Pyrolyse, haben die Nachteile, dass häufig große Mengen an Lösungsmitteln und in der Regel kostenintensive Ausgangsstoffe, wie z.B. Alkoxide, eingesetzt werden müssen.

Demgegenüber bietet die Herstellung über ein Schmelzverfahren, beispielsweise durch Erschmelzen und Homogenisieren der Ausgangsstoffe sowie Abkühlen der Schmelze, durch direktes Erstarren oder eine gezielte kontrollierte Abkühlung oder Abschrecken der Schmelze, gefolgt von einer Temperaturbehandlung (Keramisierungsbehandlung), wie beispielsweise in der DE 10 2014 100 684 A1 beschrieben, im Hinblick auf die Skalierbarkeit und Kosteneffizienz zahlreiche Vorteile. Als Ausgangsstoffe können hierbei - jeweils ausgewählt nach Kosten und Verfügbarkeit - Oxide, Hydroxide, Carbonate und/oder Salze verwendet werden. Die Ausgangsstoffe werden dann gemeinsam aufgeschmolzen und in der Schmelze homogenisiert. Im Anschluss erfolgt ein Abkühlverfahren und ggf. weitere Prozesse zur Formgebung, thermischen Nachbehandlung und Zerkleinerung. Es ist daher besonders vorteilhaft, die Herstellung eines Lithiumionenleiters über ein Schmelzverfahren durchzuführen.

Bekannt ist, dass Lithiumlanthanzirkonat (LLZO) Polymorphismus mit einer tetragonalen Struktur bei Raumtemperatur und einer kubischen Hochtemperaturstruktur zeigt. Jedoch stellt nur die kubische Hochtemperatur-Struktur die erforderliche hohe Leitfähigkeit von mehr als $10^{-5}$ S/cm zur Verfügung, während die tetragonale Modifikation nur eine deutlich geringere Ionenleitfähigkeit von $< 10^{-6}$ S/cm aufweist. Aus diesem Grund werden zahlreiche Dotierstoffe, wie Nb, Ta, Ga, W, Sb, Te, Al, eingesetzt, um die kubische Phase bei Raumtemperatur zu stabilisieren. Die Art und Weise, wie dies geschieht, wird dabei in der Regel stets mit demselben Vorgehen erreicht: Durch die Substitution eines Ions mit einer anderen, höheren Valenz werden Lithiumfehlstellen erzeugt und dadurch wird die kubische Phase stabilisiert (Gu W., Ezbiri M., Prasada Rao R., Avdeev M., Adams S., Effects of penta- and trivalent dopants on structure and conductivity of Li7La3Zr2O12, Solid State Ionics, 274, 2015, 100-105). Diese Art der Dotierung ist prinzipiell auf jedem Gitterplatz des Lithiumlanthanzirkonats (LLZO) möglich ($Li^+$ -> $M^{2/3+}$, $La^{3+}$ -> $M^{4+}$, $Zr^{4+}$ -> $M^{5/6+}$).

In Abhängigkeit von der Art des Dotierstoffs kann jedoch ein weiteres Problem auftreten. Wenn Lithiumlanthanzirkonat (LLZO) in Kontakt mit Lithiummetall, zum Beispiel als Anode in einer All-Solid-State-Batterie (ASSB), verwendet werden soll, können polyvalente Dotierstoffe, wie beispielsweise Niob (Ohta S., Kobayashi T., Asaoka T., High lithium ionic conductivity in the garnet-type oxide Li7-xLa3(Zr2-xNbx)O12 (x = 0-2), J. Power Sources, 196, 2011, 3342-3345), Wolfram (Dhivya L., Janani N., Palanivel B. und Murugan R., Li+ transport properties of W substituted Li7La3Zr2O12 cubic lithium garnets, AIP Advances, 3, 2013, 082115), Antimon (Ramakumar S., Satyanarayana L., Manorama S. V., Murugan R., Structure and Li+ dynamics of Sbdoped Li7La3Zr2O12 fast lithium ion conductors, Phys. Chem. Chem. Phys. 15, 2013, 11327-11338, Zusammenfassung) oder Tellur (Deviannapoorani C., Dhivya L., Ramakumar S., Murugan R., Lithium ion transport properties of high conductive tellurium substituted Li7La3Zr2O12 cubic lithium garnets, Journal of Power Sources, 240, 2013, 18-25) nicht eingesetzt werden, da sie reduziert werden und sich zu isolierenden Reaktionsprodukten umwandeln oder sogar elektrisch leitende Reaktionsprodukte bilden können. Unter den wenigen reduktionsstabilen Dotierstoffen sind zudem einige aufgrund ihrer hohen Materialkosten für die kommerzielle Nutzung nicht interessant, wie beispielweise Tantal (Wang Y., Lai W., High Ionic Conductivity Lithium Garnet Oxides of Li7-xLa3Zr2-xTaxO12 Compositions, Electrochem. Solid-State Lett. 15, 2012, 68-71, Zusammenfassung) und Gallium (Wu J.-F., Chen E.-Y., Yu Y., Liu L., Wu Y., Pang W. K., Peterson V. K., Guo X., Gallium-Doped Li7La3Zr2O12 Garnet-Type Electrolytes with High Lithium-Ion Conductivity, ACS Appl. Mater. Interfaces, 9, 2017, 1542-1552, Zusammenfassung).

Besonders vielversprechend ist Aluminium, da es besonders kostengünstig und zudem reduktionsstabil ist. Die Stabilisierung der kubischen Phase durch Aluminium wird in zahlreichen Veröffentlichungen beschrieben (z.B.: Rangasamy E., Wolfenstine J., Sakamoto J., The role of Al and Li concentration on the formation of cubic garnet solid electrolyte of nominal composition Li7La3Zr2O12, Solid State Ionics, 206, 2012, 28-32).

Aluminium-dotiertes Lithiumlanthanzirkonat (LLZO) ist jedoch relativ empfindlich gegenüber Schwankungen im Lithiumgehalt und auch hinsichtlich der Verfahrenstemperatur. Da Aluminium und Lithium denselben Gitterplatz einnehmen, führt ein Lithiumüberschuss, der eigentlich den Lithiumverlust bei der Herstellung kompensieren könnte und sich positiv auf das Sinterverhalten auswirken würde, zu einer bevorzugten Bildung der tetragonalen Phase und damit zu einer mangelnden Stabilisierung der kubischen Phase: Es bildet sich daher eine Mischung aus kubischem und tetragonalem Lithiumlanthanzirkonat (LLZO) (Rangasamy E. et al., 2012, a.a.O.).

Dieses Problem tritt verstärkt bei der Herstellung über ein Schmelzverfahren auf, da hier die Diffusion in der Schmelze besonders stark ist. Außerdem kann sich in Aluminium-dotiertem, kubischem Lithiumlanthanzirkonat (LLZO) bei der Abkühlung oder bei nachgeschalteten thermischen Verfahren eine Entmischung in kubischem und tetragonalem Lithiumlanthanzirkonat (LLZO) und Nebenphasen stattfinden. Dies stellt einen deutlichen Nachteil bei der Verwendung von Aluminium-Lithiumlanthanzirkonat-(LLZO) in einer All-Solid-State-Batterie (ASSB) dar, da die Herstellung häufig ein Sintern bei hohen Temperaturen umfasst.

Die Dotierung mit Aluminium als einzigem Dotierstoff wird in zahlreichen Veröffentlichungen beschrieben. Es soll nur beispielhaft auf die EP 2 159 867 A1 verwiesen werden, die sich auf einen Feststoffelektrolyten aus Aluminium-dotiertem $Li_7La_3Zr_2O_{12}$ bezieht sowie ein Verfahren zu dessen Herstellung.

Eine Lithiumionen-leitende Glaskeramik mit granatartiger Kristallstruktur wird auch in der DE 10 2014 100 684 A1 beschrieben. Die Lithiumionen-leitende Glaskeramik mit granatartiger Hauptkristallphase weist einen amorphen Anteil von mindestens 5 Gew.-% auf. Bevorzugt weist die granatartige Hauptkristallphase die Summenformel: $Li_{7+x-y}M_x^{II}M_{3-x}^{III}M_{2-y}^{IV}M_y^{V}O_{12}$ auf, wobei $M^{II}$ ein zweiwertiges Kation, $M^{III}$ ein dreiwertiges Kation, $M^{IV}$ ein vierwertiges Kation, $M^V$ ein fünfwertiges Kation darstellt, wobei vorzugsweise $0 \leq x < 3$, weiter bevorzugt $0 \leq x \leq 2$, $0 \leq y < 2$ und besonders bevorzugt $0 \leq y \leq 1$. Neben Lithium liegen bevorzugt Lanthan und Zirkon vor, wobei weitere Dotierstoffe, wie beispielsweise Aluminium, enthalten sein können. Der Einsatz von dreiwertigen Ionen als Codotierung auf dem Lanthanplatz, die einen Ionenradius kleiner als das Lanthanion aufweisen, wird nicht beschrieben.

In der JP 2013-134852 A und der JP 2013-149493 A wird eine Dotierung von Lithiumlanthanzirkonat (LLZO) mit dreiwertigen Ionen auf dem Lanthan-Platz beschrieben. Die JP 2013-134852 A offenbart ein Lithiumionen-Leitermaterial, das ein Verbundoxid mit der chemischen Formel $Li_7La_{3-x}A_xZr_2O_{12}$ darstellt, wobei A mindestens ein Metall darstellt, ausgewählt aus der Gruppe Y, Nd, Sm and Gd, und x im Bereich $0 < x < 3$ liegt. Die JP 2013-149493 A bezieht sich auf ein Lithiumionen-Leitermaterial, das ein Verbundoxid mit der chemischen Formel $Li_{7-y}La_{3-x}A_xZr_{2-y}M_yO_{12}$ darstellt, wobei A mindestens ein Metall darstellt, ausgewählt aus der Gruppe Y, Nd, Sm and Gd, mit $0 < x < 3$ und M mindestens ein Metall darstellt, ausgewählt aus der Gruppe Nb, Ta, Sb, Bi und Pb, mit $0 < y < 2$. Bei beiden Dokumenten wird aber weder eine Codotierung mit Aluminium beschrieben, noch die Möglichkeit offenbart, wie die kubische Phase mit einem Lithiumüberschuss stabilisiert werden kann.

In der CN 107732298 A wird ein Verfahren zur keramischen Herstellung von stöchiometrischem $Li_7La_3Zr_2O_{12}$, das mit Gd dotiert wird, beschrieben, ohne dass eine Codotierung mit Aluminium und die hiermit in Zusammenhang stehenden positiven Effekte durch die Dotierung erwähnt werden.

Auch die JP 2018-195483 A betrifft einen Festelektrolyten mit Granatstruktur und einer Dotierung mit Y, Nd, Sm oder Gd in Kombination mit einer Nb- oder Ta-Dotierung auf dem Zirkoniumplatz. Eine Codotierung mit Aluminium wird jedoch nicht erwähnt.

Die US 2011/244337 A1 beschreibt ein Lithiumlanthanzirkonat (LLZO) mit der Formel $Li_{5+x}La_3(Zr_x,A_{2-x})O_{12}$, das auf dem Zr-Platz mit einem oder mehreren der folgenden Elemente Sc, Ti, V, Y, Nb, Hf, Ta, Al, Si, Ga, Ge und Sn dotiert werden kann, wobei für x gilt: $1,4 \leq x < 2$. Im Gegensatz zur vorliegenden Erfindung erfolgt hier die Dotierung durch einen Ersatz von Zr und nicht von La. Dies bedeutet zudem, dass die Bedingung $(La^{3+} + M^{3+} + M^{2+} + M^{1+})/(Zr^{4+} + M^{6+} + M^{5+} + M^{4+} + M^{3+}) < 1,5$, wobei $M^{3+}$ stets vorliegt und daher nicht Null ist, nicht erfüllt werden kann. Eine Stabilisierung der kubischen Phase bei einem überstöchiometrischen Li-Gehalt ohne die Bildung von Fremdphasen kann daher in der US-Patentanmeldung nicht erreicht werden. Auch eine Dotierung mit einem dreiwertigen Ion, außer Al, Ga und Y, wird hier nicht beschrieben.

Eine Verbindung mit granatartiger Struktur, die auf dem Lanthanplatz La, Y, Pr, Nd, Sm, Eu, Gd, Tb, Dy, Ho, Er, Tm und Yb enthalten kann und optional Al enthält, wird in der DE 10 2011 079 401 A1 beschrieben. Im Einzelnen wird hier eine Verbindung mit granatartiger Kristallstruktur offenbart, die die folgende allgemeine chemische Formel aufweist:

$$Li_n[A_{(3-a''-a'')}A'_{(a')}A''_{(a'')}][B_{(2-b'-b'')}B'_{(b')}B''_{(b'')}][C'_{(c')}C''_{(c'')}]O_{12}$$

wobei A, A' und A" für eine dodekaedrische Position der granatartigen Kristallstruktur stehen,
wobei A für mindestens ein Element steht, ausgewählt aus der Gruppe bestehend aus La, Y, Pr, Nd, Sm, Eu, Gd, Tb, Dy, Ho, Er, Tm und Yb,
A' für mindestens ein Element steht, ausgewählt aus der Gruppe bestehend aus Ca, Sr und Ba,
A" für mindestens ein Element steht, ausgewählt aus der Gruppe, bestehend aus Na und K,
$0 \leq a' < 2$ ist und $0 \leq a'' < 1$ ist,
wobei B, B' und B" für eine oktaedrische Position der granatartigen Kristallstruktur stehen,
wobei B für mindestens ein Element steht, ausgewählt aus der Gruppe, bestehend aus Zr, Hf und Sn,
B' für mindestens ein Element steht, ausgewählt aus der Gruppe, bestehend aus Ta, Nb, Sb und Bi,
B" für mindestens ein Element steht, ausgewählt aus der Gruppe, bestehend aus Te, W und Mo,
$0 \leq b' \leq 2$ ist und $0 \leq b'' \leq 2$ ist,
wobei C' und C" für eine tetraedrische Position der granatartigen Kristallstruktur stehen,
wobei C' für mindestens ein Element steht, ausgewählt aus der Gruppe, bestehend aus Al und Ga,
C" für mindestens ein Element steht, ausgewählt aus der Gruppe, bestehend aus Si und Ge,
$0 \leq c' \leq 0,5$ ist und $0 \leq c'' \leq 0,4$ ist, und wobei $n = 7 + a' + 2 \cdot a'' - b' - 2 \cdot b'' - 3c' - 4.c''$ und $5,5 \leq n \leq 6,875$ ist, wobei wenn $b' = 2$ ist, $6,0 < n < 6,875$ oder $5,5 \leq n \leq 6,875$ und $c' + c'' > 0$ ist, und wobei wenn B' Nb ist, $6,0 < n < 6,4$ oder $5,5 \leq n \leq 6,875$ und $c' + c'' > 0$ und/oder $a' + a'' > 0$ ist.

Allerdings muss hier der Lithiumgehalt entsprechend dieser Granatstrukturformel zwischen 5,5 und maximal 6,875 liegen und damit dem stöchiometrischen Lithiumgehalt, vorgegeben durch die Dotierungen, entsprechen. Ein überstöchiometrischer Lithiumgehalt, wie in der vorliegenden Erfindung, ist demgemäß nicht umfasst. Ein überstöchiometrischer Lithiumgehalt wirkt sich jedoch positiv auf das Sinterverhalten, beispielsweise durch Absenkung der Sintertemperaturen, aus und dient dazu, bei der Herstellung oder Weiterverarbeitung entstehende mögliche Lithiumverluste auszugleichen. Dies ist gemäß der DE 10 2011 079 401 A1 nicht möglich.

Ein analoges Material wird in der WO 2019/055730 A1 für die Verwendung zur Extraktion von Alkalimetallen aus Lösungen vorgeschlagen. Insbesondere bezieht sich das Dokument auf eine ionenleitende Festkörper-Elektrolytmembran, umfassend ein Oxidmaterial mit granatartiger Struktur mit der allgemeinen Formel:

$$Li_n[A_{(3-a'-a'')}A'_{(a')}A''_{(a'')}][B_{(2-b'-b'')}B'_{(b')}B''_{(b'')}][C'_{(c')}C''_{(c'')}]O_{12},$$

wobei A, A', and A" für eine Dodekaeder-Position des Kristalls steht:

A steht für ein oder mehrere dreiwertige Selten Erd-Elemente, wie La, Ce, Sc, Y, Pr, Nd, Sm, Eu, Gd, Tb, Dy, Ho, Er, Tm, and Yb.
A' steht für ein oder mehrere Erdalkalimetall-Elemente, wie Mg, Ca, Sr, and Ba.
A" steht für ein oder mehrere Alkalimetall-Elemente außer Li, wie Na and K.
Es gilt: $0 < a' < 2$ and $0 < a'' \leq 1$.

B, B', and B" stehen für eine Oktaeder-Position des Kristalls:

B steht für ein oder mehrere vierwertige Elemente, wie Zr, Hf, and Ti.
B' steht für ein oder mehrere fünfwertige Elemente, wie Ta, Nb, V, Sb, and Bi.
B" steht für ein oder mehrere sechswertige Elemente, wie Te, W, and Mo.
Es gilt: $0 < b' + b" < 2$.

C und C" stehen für eine Tetraeder-Position der Kristallstruktur:

C steht für ein oder mehrere von Al, Ga und Bor.
C" steht für ein oder mehrere von Si und Ge.

Es gilt: $0 < c' < 0,5$ und $0 < c" < 0,4$; und $n = 7 + a' + 2a" - b' - 2b" - 3c' - 4c"$ und $4,5 < n < 7,5$.

Auch hier wird jedoch ein möglicher Lithiumüberschuss explizit ausgeschlossen.

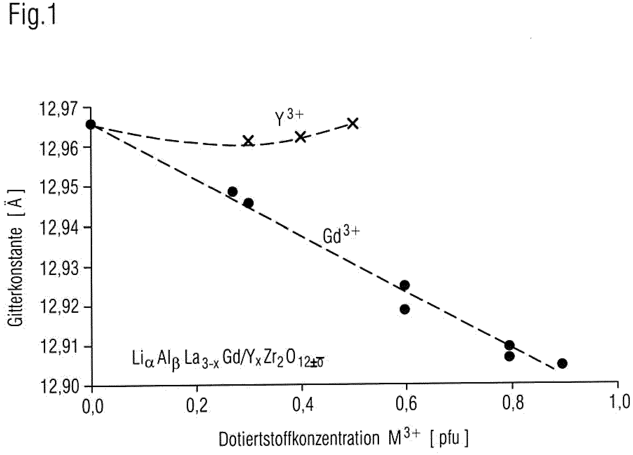

Auch in der US 2016/268630 A1 wird eine Dotierung von Lithiumlanthanzirkonat (LLZO) mit Seltenen Erden, bevorzugt Gd, Tb, Dy, Ho, Er, Tm, Yb und Lu, offenbart. Beschrieben wird die folgende Formel: $Li_{7+x}La_3Zr_{2-x}A_xO_{12}$, wobei A ein oder mehrere Selten Erden-Elemente darstellt. Das Material kann weiterhin 0,3 bis 2 Gew.-% Aluminium enthalten. Die Dotierung erfolgt hier jedoch auf dem Zirkoniumplatz. Daher kann das Verhältnis von $(La^{3+} + M^{3+} + M^{2+} + M^{1+})/(Zr^{4+} + M^{6+} + M^{5+} + M^{4+} + M^{3+}) < 1,5$, wobei $M^{3+}$ stets vorliegt und daher nicht Null ist, hier gar nicht erfüllt werden, da auf dem Lanthanplatz nicht dotiert wird. In der US 2016/268630 A1 führt der Einbau der beschriebenen Ionen, die einen größeren Ionenradius als das $Zr^{4+}$ aufweisen, auf dem Zirkonium-Platz zu einer Zunahme der Gitterkonstante des Lithiumlanthanzirkonats (LLZO). In der vorliegenden Erfindung führt der Einbau von Seltenen Erd-Ionen auf dem Lanthan-Platz im Gegensatz hierzu zu einer Abnahme der Gitterkonstanten (vgl. Fig. 1 der vorliegenden Erfindung, Gd-Dotierung). Es liegen daher gegensätzliche Effekte zur vorliegenden Erfindung vor.

Die Verwendung von weiteren Dotierstoffen neben Aluminium wird in der JP 2012-031025 A beschrieben. Hier wird eine Aluminium-dotierte Lithium-Granat-Verbindung mit der Formel

$$Li_xLn_3(M^1_yM^2_z)O_t$$

beschrieben, wobei

Ln = ein oder mehrere Elemente darstellt, ausgewählt aus der Gruppe, bestehend aus La, Pr, Nd, Sm, Lu, Y, K, Mg, Ba, Ca, Sr;
$M^1$ = ein oder mehrere Elemente darstellt, ausgewählt aus der Gruppe, bestehend aus Si, Sc, Ti, V, Ga, Ge, Y, Zr, Nb, In, Sb, Te, Hf, Ta, W, Bi;
$M^2$ = ein oder mehrere Elemente darstellt, ausgewählt aus der Gruppe, bestehend aus Sc, Ti, V, Y, Nb, Hf, Ta, Si, Ga, Ge, unterschiedlich zu $M^1$;
wobei $3 \leq x \leq 8$; $y > 0$; $z \geq 0$; $1,9 \leq y + z \leq 2,1$ und $11 \leq t \leq 13$. Obwohl entsprechend der angegebenen Granatformel auch eine Codotierung eines Aluminium-haltigen Materials mit einem dreiwertigen Ion auf dem Lanthanplatz möglich wäre, wird die Codotierung unter Verwendung von kleineren, vorzugsweise nicht polyvalenten, Ionen hier nicht offenbart. Auch die bevorzugte Dotierung mit Seltenen Erd-Ionen, wie Gd, auf dem Lanthanplatz wird hier nicht beschrieben.

Die EP 3 518 251 A1 offenbart einen Festelektrolyten mit der Formel $(Li_{7-ax+y},A_x)La_3(Zr_{2-y}B_y)O_{12}$, wobei A ausgewählt ist aus Mg, Zn, Al, Ga und Sc, a = Valenz von A, B ist ausgewählt aus Al, Ga, Sc, Yb, Dy, und Y, und $0 < x < 1,0$, $0 < y < 1,0$ und $5,5 < (7 - ax + y) < 7,0$. Die Dotierung erfolgt hier im Unterschied zur vorliegenden Erfindung auf dem Zr-Platz. Damit ist die Einstellung des Verhältnisses von $(La^{3+} + M^{3+} + M^{2+} + M^{1+})/(Zr^{4+} + M^{6+} + M^{5+} + M^{4+} + M^{3+}) < 1,5$ hier nicht möglich. Auch ein überstöchiometrischer Lithiumgehalt, der dadurch ermöglicht würde, wird mit der Bedingung $(7 - ax + y) < 7$ generell ausgeschlossen.

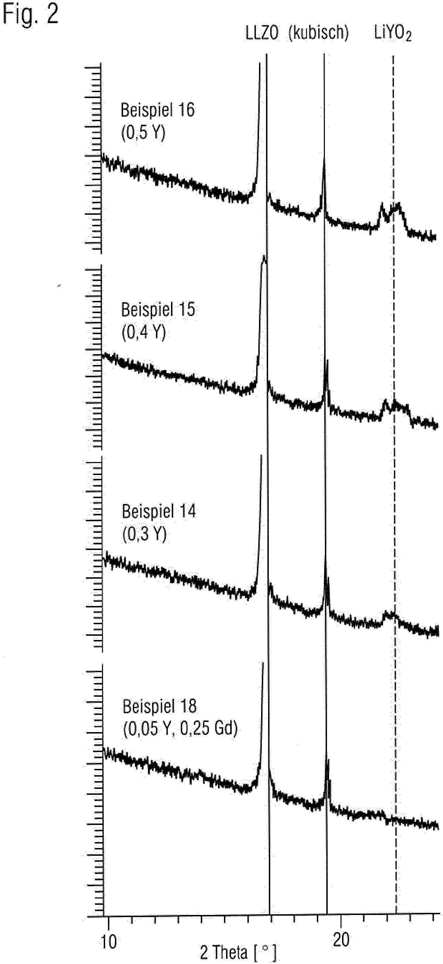

Die CN 106129463 schlägt die Verwendung eines Lithiumlanthanzirkonat-(LLZO)-Materials mit der Formel $Li_{6+x}Al_y(La_zA_{3-z})(Zr_nG_{2-n})O_{12}$ vor, das mit 0 bis 3 Gew.-% $SiO_2$, $Bi_2O_3$, $B_2O_3$, $CeO_2$, ZnO, CuO, $MnO_2$, $Co_2O_3$ and $SnO_2$ versetzt wird, um die Sinterfähigkeit zu verbessern. Auf dem Lathanplatz können die Elemente A, ausgewählt aus mindestens einem von Ca, Sr, Y oder Ba, dotiert werden, auf dem Zirkoniumplatz können die Elemente G, ausgewählt aus mindestens einem von Ti, Nb, Ta, Sb und V, dotiert werden. Für die übrigen Parameter gilt: $0 \leq x \leq 2$, $0 \leq y \leq 1$, $2 \leq z \leq 3$, $1 \leq n \leq 2$. Die vorteilhafte Verwendung von Aluminium in Kombination mit einem kleineren dreiwertigen Ion auf dem Lanthanplatz, außer Yttrium, wird nicht beschrieben. In den Versuchen zur vorliegenden Erfindung hat sich gezeigt, dass der gewünschte Effekt der Dotierung eines kleineren Ions auf dem Lanthanplatz beim Einsatz von Yttrium als alleinigem Dotierstoff nicht erreicht werden kann, da dieses bei höheren Dotierungen teilweise auf dem Zirkoniumplatz eingebaut wird, was zur Bildung von unerwünschten Nebenphasen führt (vgl. Figur 2 der vorliegenden Erfindung). Daher liegt Yttrium erfindungsgemäß stets in Kombination mit einem weiteren dreiwertigen Ion $M^{3+}$ vor, welches von $Y^{3+}$ verschieden ist und einen Ionenradius aufweist, der kleiner ist als der von $La^{3+}$. Dies geht aus dem Stand der Technik nicht hervor. Zudem werden erfindungsgemäß bevorzugt geringe Mengen an Yttrium bis < 0,2 pro Formeleinheit des Aluminium-dotierten Lithiumionenleiters eingesetzt, welche die Stabilisierung der kubischen Phase begünstigen und keine Nebenphasen erzeugen. Dies geht aus der CN 106129463 ebenfalls nicht hervor.

Die Verwendung von Lanthaniden und/oder Actiniden als Dotierstoff wird ebenfalls in der US 2018/013171 A1 und der US 2019/006707 A1 der Universität Michigan thematisiert. Die beschriebene Keramik hat eine Struktur entsprechend der Formel $Li_wA_xRe_{3-y}M_2O_z$, wobei A ausgewählt ist aus B, Al, Ga, In, Zn, Cd, Y, Sc, Mg, Ca, Sr und Ba und Kombinationen hiervon, Re ein oder mehrere Lanthanide und oder Actinide und M die Elemente Zr, Hf, Nb, Ta, Mo, W, Sn, Ge, Si, Sb, Se, Te umfasst mit w = 5 - 7,5, x = 0 - 2, y = 0,01 - 0,75, z = 10,875 - 13,125. Obwohl hier ganz formal auch ein mit Aluminium-dotierter Granat mit Lanthan und einem weiteren dreiwertigen Ion an der Stelle des Re möglich wäre, wird diese Kombination vorliegend nicht explizit offenbart und die positiven Effekte werden ebenfalls nicht beschrieben. Der Lithiumgehalt ist unabhängig von der Dotierung auf maximal 7,5 begrenzt.

Die CN 109888374 A beschreibt ein auf dem Zirkoniumplatz mit Te, Ta, Ti, Nb, Ge, Ga, Gd oder Bi dotiertes Festelektrolyt-Material mit der Formel $A\text{-}Li_{7-bx}La_3Zr_{2-x}M_xO_{12}$, wobei A aus mindestens einem von $Al_2O_3$, $Al(NO_3)_3$, Aluminiumcarbonat, ZnO und MgO ausgewählt ist, $0,1 \leq x \leq 1,5$, b = 0 für 4-wertige Ionen und b = 1 für 5-wertige Ionen M gilt. Daraus ergibt sich, dass der Lithiumgehalt auf die stöchiometrische Lithium-Menge begrenzt ist. Im Gegensatz zur vorliegenden Erfindung erfolgt die Dotierung ausschließlich auf dem Zirkoniumplatz, weshalb $(La^{3+} + M^{3+} + M^{2+} + M^{1+})/(Zr^{4+} + M^{6+} + M^{5+} + M^{4+} + M^{3+}) < 1,5$ nicht erfüllt ist. Die positiven Effekte der Dotierung mit einem kleineren Ion auf dem Lanthanplatz können so nicht realisiert werden.

Ein mit Sr, Gd auf dem Lanthanplatz und Zn, Al auf dem Zirkoniumplatz dotiertes Festelektrolyt-Material wird in der CN 107768715 A vorgeschlagen. Die chemische Formel lautet: $Li_{7+x+2m+n}La_{3-x-y}Sr_xGd_yZr_{2-m-n}Zn_mAl_nO_{12}$, wobei $0,2 \leq x \leq 0,4$, $0,1 \leq y \leq 0,2$, $0,1 \leq m \leq 0,2$, $0,2 \leq n \leq 0,3$. Im Stand der Technik wird die Verwendung von Zink generell als völlig ungeeignet angesehen, die notwendigen Lithiumfehlstellen zu generieren, um eine hohe Ionenleitfähigkeit zu gewährleisten (siehe Rangasamy E., Wolfenstine J., Sakamoto J., The role of Al and Li concentration on the formation of cubic garnet solid electrolyte of nominal composition Li7La3Zr2O12, Solid State Ionics, 206, 2012, 28-32). Eine Dotierung von Aluminium auf dem Zirkoniumplatz ist in der vorliegenden Erfindung nicht vorgesehen und nicht erwünscht, da dies der Erzeugung der gewünschten Lithium-Fehlstellen ($Zr^{4+}$ -> $Al^{3+} + Li^+$) widersprechen würde.

Schließlich beschreibt die EP 3 459 920 A1 einen granat-basierten Ionenleiter, bei dem sowohl Aluminium als auch weitere Lanthanoide neben Lanthan dotiert werden können. Die allgemeine Formel lautet: $(Li_{x-3y-z}, E_y, H_z)\,L_\alpha M_\beta O_\gamma$, wobei E mindestens eines von Al, Ga, Fe und Si darstellt; L ist mindestens ein Erdalkalimetall oder Lanthanoid: M ist mindestens ein Element, ausgewählt aus einem Übergangselement mit 6er-Koordination mit Sauerstoff oder einem typischen Element in Gruppe 12 bis 15 des Periodensystems; $3 \leq x - 3y - z \leq 7$; $0 \leq y < 0,22$; $0 \leq z \leq 2,8$; $2,5 \leq a \leq 3,5$; $1,5 \leq \beta \leq 2,5$; and $11 \leq \gamma \leq 13$. Allerdings wird hier ein überstöchiometrischer Lithiumgehalt explizit vermieden, indem ein Teil des Lithiums durch Behandlung mit Wasser gegen $H^+$ ausgetauscht wird. Ein Nachteil dieser Behandlung ist jedoch, dass durch die Verringerung der Menge der $Li^+$-Ionen und eine mögliche Protonenleitung, die entstehen kann, die Leistungsfähigkeit in der Batterie deutlich verschlechtert werden kann. Obwohl hier ganz formal auch ein mit Aluminium-dotierter Granat mit Lanthan und weiteren dreiwertigen Ionen $M^{3+}$ an der Stelle des L möglich wäre, wird diese Kombination vorliegend nicht explizit offenbart und die positiven Effekte der Dotierung mit kleineren dreiwertigen Kationen $M^{3+}$ an der Stelle des L werden ebenfalls nicht beschrieben.

Der vorliegenden Erfindung liegt daher die Aufgabe zugrunde, die im Stand der Technik geschilderten Nachteile zu vermeiden und einen Aluminium-dotierten Lithiumionenleiter auf Basis einer Granatstruktur, insbesondere ein Lithiumlanthanzirkonat (LLZO), bereitzustellen, der/das einen gegenüber der Stöchiometrie vorliegenden Überschuss an Lithium aufweist, aber dennoch über eine ausreichende Stabilität in der kubischen Modifikation verfügt, insbesondere gegenüber thermischen Verfahren stabil ist. Die vorteilhaften Eigenschaften der Aluminium-Dotierung, wie beispielsweise ein kostengünstiger Einsatz von Aluminium und eine Reduktionsstabilität in Kontakt mit Lithiummetall, sollen erhalten bleiben. Zudem soll der Aluminium-dotierte Lithiumionenleiter auf Basis einer Granatstruktur über ein Schmelzverfahren herstellbar sein.

## Beschreibung der Erfindung

Die vorstehend geschilderte Aufgabe wird erfindungsgemäß durch die Merkmale der unabhängigen Ansprüche gelöst. Die Unteransprüche stellen bevorzugte Ausgestaltungen der Erfindung dar.

In überraschender Weise wurde festgestellt, dass die obige Aufgabe durch einen Aluminium-dotierten Lithiumionenleiter auf Basis einer Granatstruktur, umfassend Lanthan, insbesondere ein Aluminium-dotiertes Lithiumlanthanzirkonat (LLZO), gelöst wird, wobei dieser/dieses mit mindestens einem dreiwertigen Ion $M^{3+}$ auf dem Lanthanplatz codotiert ist, wobei das dreiwertige Ion $M^{3+}$ einen Ionenradius aufweist, der kleiner ist als der von $La^{3+}$, und ein im Vergleich zu einer stöchiometrischen Granatstruktur höherer Lithium-Gehalt (überstöchiometrischer Lithiumgehalt) vorliegt, mit der Maßgabe, dass, wenn $M^{3+}$ Yttrium darstellt, ein weiteres dreiwertiges Ion $M^{3+}$, welches von $Y^{3+}$ verschieden ist und einen Ionenradius aufweist, der kleiner ist als der von $La^{3+}$, auf dem Lanthanplatz codotiert ist.

Gemäß einer bevorzugten Ausführungsform bezieht sich die vorliegende Erfindung daher auf einen Aluminium-dotierten Lithiumionenleiter mit der allgemeinen chemischen Formel:

$$Li_{7-3x+y'+2y''-z'-2z''+u}Al_x{}^{3+}La_{3-y-y'}M_y{}^{3+}M_{y'}{}^{2+}M_{y''}{}^{1+}Zr_{2-z-z'-z''}M_z{}^{4+}M_{z'}{}^{5+}M_{z''}{}^{6+}O_{12\pm\delta} \qquad (I)$$

wobei

$M^{3+}$: ein oder mehrere dreiwertige Kationen mit einem Ionenradius kleiner als $La^{3+}$, außer $Al^{3+}$, darstellt,
$M^{2+}$: ein oder mehrere zweiwertige Kationen darstellt,
$M^{1+}$: ein oder mehrere einwertige Kationen, außer $Li^+$, darstellt,
$M^{4+}$: ein oder mehrere vierwertige Kationen, außer $Zr^{4+}$, darstellt,
$M^{5+}$: ein oder mehrere fünfwertige Kationen darstellt,
$M^{6+}$: ein oder mehrere sechswertige Kationen darstellt,

$0,1 \leq x < 1$
$0 < y < 2$
$0 \leq y' < 0,2$
$0 \leq y'' < 0,2$
$0 \leq y'+y'' < 0,2$
$0 \leq z < 0,5$
$0 \leq z' < 0,8$
$0 \leq z'' < 0,5$
$0 \leq \delta < 2$,
wobei

$u > 0$ für einen überstöchiometrischen Lithiumgehalt ist, bevorzugt $u \geq 0,2$,
mit der Maßgabe, dass, wenn $M^{3+}$ Yttrium darstellt, ein weiteres dreiwertiges Ion $M^{3+}$, welches von $Y^{3+}$ verschieden ist und einen Ionenradius aufweist, der kleiner ist als der von $La^{3+}$, auf dem Lanthanplatz codotiert ist.

Bei der obigen allgemeinen chemischen Formel (I) handelt es sich um ein Aluminium-dotiertes Lithiumlanthanzirkonat (LLZO).

Die Formulierung "auf Basis einer Granatstruktur" bedeutet, dass jeweils die bekannte Grundstruktur vorliegt, wobei jedoch aus dem Stand der Technik bekannte Abweichungen von der Grundstruktur vorliegen können. Dies können beispielsweise zusätzlich Dotierungen mit anderen Elementen, die aus dem Stand der Technik bekannt sind, sein. Der Begriff umfasst daher sämtliche unter den allgemeinen Oberbegriff Granatstruktur oder granatartige Struktur fallende Verbindungen.

$0,1 \leq x$ bedeutet $x = 0,1$ und $0,1 < x$, wobei $0,1 < x$ bevorzugt Werte für x bedeutet, die 0,11 oder größer sind; und $x < 1$ bedeutet bevorzugt Werte für x, die 0,99 oder kleiner sind.

$0 < y$ bedeutet bevorzugt Werte für y, die 0,01 oder größer sind und $y < 2$ bedeutet bevorzugt Werte für y, die 1,99 oder kleiner sind.

$0 \leq y'$ bedeutet $y' = 0$ und $0 < y'$, wobei $0 < y'$ bevorzugt Werte für y' bedeutet, die 0,01 oder größer sind; und $y' < 0,2$ bedeutet bevorzugt Werte für y', die 0,19 oder kleiner sind.

$0 \leq y''$ bedeutet $y'' = 0$ und $0 < y''$, wobei $0 < y''$ bevorzugt Werte für y'' bedeutet, die 0,01 oder größer sind; und $y'' < 0,2$ bedeutet bevorzugt Werte für y'', die 0,19 oder kleiner sind.

$0 \leq y'+y''$ bedeutet $y'+y'' = 0$ und $0 < y'+y''$, wobei $0 < y'+y''$ bevorzugt Werte für y'+y'' bedeutet, die 0,01 oder größer sind; und $y'+y'' < 0,2$ bedeutet bevorzugt Werte für y'+y'', die 0,19 oder kleiner sind.

$0 \leq z$ bedeutet $z = 0$ und $0 < z$, wobei $0 < z$ bevorzugt Werte für z bedeutet, die 0,01 oder größer sind; und $z < 0,5$ bedeutet bevorzugt Werte für z, die 0,49 oder kleiner sind.

$0 \leq z'$ bedeutet $z' = 0$ und $0 < z'$, wobei $0 < z'$ bevorzugt Werte für z' bedeutet, die 0,01 oder größer sind; und $z' < 0,8$ bedeutet bevorzugt Werte für z', die 0,79 oder kleiner sind.

$0 \leq z''$ bedeutet $z'' = 0$ und $0 < z''$, wobei $0 < z''$ bevorzugt Werte für z'' bedeutet, die 0,01 oder größer sind; und $z'' < 0,5$ bedeutet bevorzugt Werte für z'', die 0,49 oder kleiner sind.

$u > 0$ bedeutet bevorzugt Werte für u, die 0,01 oder größer sind.
$u \geq 0,2$ bedeutet $u = 0,2$ und $u > 0,2$, wobei $u > 0,2$ bevorzugt Werte für u bedeutet, die 0,21 oder größer sind.

Gemäß einer Ausführungsform weist das Aluminium-dotierte Lithiumlanthanzirkonat (LLZO) gemäß obiger chemischer Formel (I) daher einen im Vergleich zu einer stöchiometrischen Granatstruktur höheren Lithium-Gehalt auf, der bei u > 0, bevorzugt u $\geq$ 0,2, liegt. Ein stöchiometrischer Lithiumgehalt würde für u = 0 vorliegen. Dieser wird durch die Menge an $Al^{3+}$ und $M^{1+}$, $M^{2+}$, $M^{5+}$ und $M^{6+}$ bestimmt: $Li_{7-3x+y'+2y''-z'-2z''}$. Ein stöchiometrischer Lithiumgehalt im Aluminium-dotierten Lithiumionenleiter, bevorzugt Lithiumlanthanzirkonat (LLZO), ist erfindungsgemäß nicht erwünscht und wird daher ausgeschlossen.

Es hat sich herausgestellt, dass es vorteilhaft ist, wenn die Menge x an Aluminium $0,1 \leq x < 1$, bezogen auf eine Formeleinheit des Lithiumlanthanzirkonats (LLZO), bevorzugt $0,14 \leq x < 1$, bezogen auf eine Formeleinheit des Lithiumlanthanzirkonats (LLZO), in der Formel (I) beträgt, um ausreichende Lithium-Fehlstellen ($V_{Li}$) zur Stabilisierung der kubischen Modifikation von dotiertem Lithiumlanthanzirkonat (LLZO) bei Raumtemperatur zu erhalten. Besonders bevorzugt gilt auch: $0,1 \leq x < 0,5$, noch bevorzugter ist $0,14 \leq x < 0,5$.

Zur Vereinfachung und zum besseren Verständnis wird in der vorliegenden Beschreibung das Lithiumlanthanzirkonat (LLZO) in der Regel als repräsentatives Beispiel für einen Aluminium-dotierten Lithiumionenleiter zur Erläuterung herangezogen. Es versteht sich jedoch, dass die Ausführungen in gleicher Weise für jeden anderen Aluminium-dotierten granatbasierten Lithiumionenleiter gelten sollen. Der Aluminium-dotierte granatbasierte Lithiumionenleiter wird nachfolgend auch einfach nur als Lithiumionenleiter oder Aluminium-dotierter Lithiumionenleiter bezeichnet.

Die Zahlen- bzw. Mengenangaben für die einzelnen Bestandteile des Lithiumionenleiters, die ohne Einheit angegeben werden, sind als [pfu] zu verstehen, d.h. Atome pro Formeleinheit des Aluminium-dotierten Lithiumionenleiters, insbesondere des Aluminium-dotierten Lithiumlanthanzirkonats (LLZO).

Die supervalente Dotierung eines Aluminium-dotierten Lithiumionenleiter, insbesondere von Lithiumlanthanzirkonat (LLZO), d.h. eine Dotierung mit Ionen, die eine höhere Valenz als das zu ersetzende Ion aufweisen, ist von großer Bedeutung zur Erzeugung von Lithiumfehlstellen, die schließlich zur Stabilisierung der kubischen Modifikation mit hoher Ionenleitfähigkeit bei Raumtemperatur führen.

Erfindungsgemäß liegt daher eine supervalente Dotierung mit Aluminium auf dem Lithiumplatz ($Li^+$ -> $Al^{3+}$ + 2 $V_{Li}$; zwei Li-Fehlstellen werden pro $Al^{3+}$ generiert) vor. Die Dotierung mit Aluminium ist - wie bereits erwähnt - auf Grund der geringen Rohstoffkosten, insbesondere im Vergleich zu Tantal oder Gallium, sowie der guten Redoxstabilität im Vergleich zu Niob von Vorteil. Da jedoch, anders als bei der Dotierung mit Tantal oder Niob, die Dotierung mit Aluminium direkt auf dem Lithium-Platz erfolgt, ist ein exaktes Ausbalancieren des Lithium-Aluminium-Verhältnisses notwendig, um die richtige Phase zu erhalten: Eine Erhöhung des Lithium-Gehalts an sich würde dazu führen, dass der Dotierstoff Aluminium teilweise wieder aus der Kristallstruktur verdrängt würde, so dass das kubische Lithiumlanthanzirkonat (LLZO) nicht mehr ausreichend bei Raumtemperatur stabilisiert werden würde. Eine einfache Erhöhung des Lithium-Gehalts durch Einsetzen einer größeren Menge an Lithium-Ausgangskomponente kommt daher nicht in Frage.

Dieser Umstand ist besonders kritisch, da ein erhöhter Lithium-Gehalt wünschenswert ist, um zum einen die Abdampfung von $Li_2O$ bei den hohen Synthesetemperaturen (unabhängig vom Herstellungsverfahren: Reaktivsintern, Sol-Gel, Spray-Pyrolyse, Schmelze) zu kompensieren und zum anderen, um die Sintereigenschaften des Materials zu verbessern (Rangasamy E. et al., 2012, a.a.O.). Bei der Herstellung von Lithiumlanthanzirkonat (LLZO) über ein Schmelzverfahren reagiert die Phasenzusammensetzung besonders sensibel auf eine Änderung des Aluminium-Lithium-Verhältnisses. Schon eine leichte Änderung des Lithium-Gehalts, wie sie für Schwankungen in der Produktion vorkommen kann, führt zu einer massiven Verschiebung des Phasengehalts hin zum unerwünschten tetragonalen Lithiumlanthanzirkonat (LLZO). Dies wird auch in den Beispielen zur vorliegenden Erfindung gezeigt.

Die vorliegende Erfindung löst dieses Problem der Lithiumsensibilität von Aluminium-dotiertem Lithiumionenleiter, insbesondere Aluminium-dotiertem Lithiumlanthanzirkonat (LLZO), durch eine bestimmte Codotierungs-Strategie für den Aluminium-dotierten Lithiumionenleiter, welche die kubische Phase gegen einen höheren, insbesondere überstöchiometrischen Lithiumgehalt stabilisiert.

Die erfindungsmäßige Codotierungsstrategie umfasst die Dotierung eines Aluminium-dotierten Lithiumionenleiters, insbesondere Aluminium-dotiertem Lithiumlanthanzirkonat (LLZO), mit einem oder mehreren dreiwertigen Kationen $M^{3+}$ auf dem Lanthanplatz, deren Ionenradius nach Shannon (Shannon, R. D., Revised effective ionic radii and systematic studies of interatomic distances in halides and chalcogenides, Acta Cryst. 32, 1976, 751-767) kleiner ist als der Ionenradius des $La^{3+}$-Kations.

Bevorzugt ist die Verwendung von dreiwertigen Kationen der Lanthaniden als $M^{3+}$, die der genannten Bedingung für den Ionenradius entsprechen, d.h. der Gruppe, bestehend aus Cer, Praseodym, Neodym, Promethium, Samarium, Europium, Gadolinium, Terbium, Dysprosium, Holmium, Erbium, Thulium, Ytterbium und Lutetium. Auch Actiniden, wie beispielweise Thorium und Protactinium, könnten eingesetzt werden, da sie der Bedingung eines kleineren Ionenradius als $La^{3+}$ genügen. Aufgrund ihrer Radioaktivität sollte jedoch von der Verwendung abgesehen werden. Es können auch andere dreiwertige Kationen eingesetzt werden, welche die Voraussetzung erfüllen, dass sie einen kleineren Ionenradius als $La^{3+}$ aufweisen, wie beispielsweise Yttrium, Scandium, Bismut und Indium. Ganz besonders bevorzugt ist die Kombination von Gadolinium und Yttrium. Die Erfindung ist aber nicht hierauf beschränkt.

Das alleinige Vorliegen von Yttrium als dreiwertiges Kation $M^{3+}$ ist in der vorliegenden Erfindung generell ausgeschlossen, da dieses die erfindungsgemäße Aufgabe nicht löst: Es hat sich herausgestellt, dass die alleinige

EP 3 905 409 A1

Verwendung von Yttrium als $M^{3+}$ nicht die gewünschte Stabilisierung zeigt, da die zur Stabilisierung nötige Menge $Y^{3+}$ nicht vollständig auf dem Lanthanplatz eingebaut wird. Mit steigendem Yttrium-Gehalt nimmt die Bildung unerwünschter Nebenphasen stark zu (vgl. Figur 2 der vorliegenden Erfindung und die Erläuterungen hierzu). Wie noch im Einzelnen beschreiben wird, zeigt Figur 1 bei der Verwendung von Yttrium im Vergleich zu Gadolinium ein Abweichen des Gitterparameters vom Vegard'schen Gesetz (linearer Zusammenhang zwischen Dotierungsgrad und Gitterparameter). Dieses Verhalten ist vermutlich auf die andere Bindungsstruktur des Yttriums im Vergleich zu den Lanthaniden zurückzuführen, die durch das Fehlen von f-Orbitalen bei Yttrium gekennzeichnet ist. Daher muss, wenn $M^{3+}$ Yttrium ist, ein weiteres dreiwertiges Ion $M^{3+}$, welches einen Ionenradius aufweist, der kleiner ist als der von $La^{3+}$, und welches verschieden von $Y^{3+}$ ist, auf dem Lanthanplatz codotiert werden.

Wenn Yttrium im Aluminium-dotierten Lithiumionenleiter vorliegen soll, ist es besonders vorteilhaft, wenn Yttrium in einer derartigen Menge eingesetzt wird, dass $Y^{3+} < 0,2$ pro Formeleinheit des Aluminium-dotierten Lithiumionenleiters beträgt. Hierdurch kann die Stabilisierung der kubischen Phase begünstigt werden.

Von den dreiwertigen Kationen der Lanthaniden als $M^{3+}$ ist Gadolinium besonders bevorzugt. So ist die Verwendung von mindestens 0,1 mol Gadolinium als dreiwertiges Kation pro Formeleinheit des Aluminium-dotierten Lithiumionenleiters, insbesondere Aluminium-dotierten Lithiumlanthanzirkonats (LLZO), besonders vorteilhaft. Mit anderen Worten ist in der obigen Formel (I) das dreiwertige Kation $M^{3+}$ besonders bevorzugt Gadolinium und für y gilt dann: y > 0,1 [pfu]. Besonders bevorzugt ist dann y = 0,11 oder größer. Hierdurch wird Aluminium als Dotierstoff in der Granatstruktur besonders gut stabilisiert, wodurch auch im Fall eines Lithium-Überschusses die kubische Phase erhalten bleibt.

In einer weiteren besonders bevorzugten Ausführungsform liegt im Aluminium-dotierten Lithiumionenleiter für $M^{3+}$ eine Kombination von $Gd^{3+}$ und $Y^{3+}$ vor und es gilt bevorzugt: $Y^{3+} < 0,2$ pro Formeleinheit des Aluminium-dotierten Lithiumionenleiters und $Gd^{3+} > 0,1$ pro Formeleinheit des Aluminium-dotierten Lithiumionenleiters.

Für die Verwendung des beschriebenen ionenleitenden Lithiumlanthanzirkonats (LLZO) als Elektrolyt in einer Batterie mit Lithiumanode, ist es bevorzugt, wenn die zur Dotierung auf dem Lanthanplatz verwendeten dreiwertigen Kationen $M^{3+}$ nicht polyvalent sind. Mit anderen Worten werden Ionen $M^{3+}$, die eine andere Wertigkeit als die dreiwertige aufweisen können, wie beispielsweise $Ce^{3+}/Ce^{4+}$, in der vorliegenden Erfindung für $M^{3+}$ bevorzugt dann nicht verwendet, wenn in einer zu verwendenden Batterie eine Lithiumanode vorliegt. Auch andere Anodenmaterialien können polyvalente Kationen reduzieren.

Die Auswahl der Dotierstoffe für das Lanthan in Bezug auf ihren kleineren Ionenradius ist ein völlig neuartiges Konzept und es wird ein völlig anderer Ansatz als im gesamten Stand der Technik verfolgt: Das aus dem Stand der Technik bekannte Vorgehen ist die aliovalente Dotierung (Dotierung mit Ionen anderer Valenz) (z.B. $Zr^{4+}$ -> $Ta^{5+}$ + $V_{Li}$ oder $Zr^{4+}$ -> $Y^{3+}$ + $Li^+$) zur Beeinflussung der Lithium-Fehlstellenkonzentration ($V_{Li}$). Im Gegensatz hierzu wird erfindungsgemäß eine isovalente Dotierung (Dotierung mit Ionen gleicher Valenz) mit einem kleineren dreiwertigen Kation ($M^{3+}$ für $La^{3+}$) durchgeführt, wobei die Lithium-Fehlstellenkonzentration ($V_{Li}$) nicht direkt beeinflusst wird, sondern durch die Änderung der Gittergeometrie der vorhandene aliovalente Dotierstoff Aluminium in der Kristallstruktur stabilisiert wird. Dies kann auch als "Dotierung zweiter Ordnung" bezeichnet werden. Anders als im Stand der Technik üblich, wird daher anstelle der Lithium-Fehlstellenkonzentration ($V_{Li}$) direkt auf die Gittergeometrie Einfluss genommen.

Da $Al^{3+}$ und $Li^+$ um die gleichen Gitterplätze konkurrieren, wird bei einem überstöchiometrischen Lithiumgehalt Aluminium aus der Lithiumlanthanzirkonat (LLZO)-Struktur verdrängt. Dadurch wird die gewünschte kubische Modifikation nicht mehr ausreichend stabilisiert und es entsteht teilweise tetragonales Lithiumlanthanzirkonat (LLZO). Dies wird in den Beispielen zur vorliegenden Erfindung gezeigt und belegt.

Durch den teilweisen Ersatz von $La^{3+}$ durch ein oder mehrere dreiwertige Kationen $M^{3+}$, deren Ionenradius kleiner ist als der von $La^{3+}$, verkleinert sich die Elementarzelle der Lithiumlanthanzirkonat (LLZO)-Struktur (s. auch Figur 1). Da das $Al^{3+}$-Kation mit einem Ionenradius nach Shannon (Shannon, R. D., 1976, a.a.O.) von 67,5 pm in oktaedrischer Koordination bzw. 53,5 pm in tetraedrischer Koordination kleiner ist als das $Li^+$-Kation mit einem Ionenradius nach Shannon (Shannon, R. D., 1976, a.a.O.) von 90 pm in oktaedrischer Koordination bzw. 76 pm in tetraedrischer Koordination, wird bei einer kleineren Elementarzelle der Einbau von $Al^{3+}$ begünstigt. Es ist daher bevorzugt, wenn die Gitterkonstante a der kubischen Lithiumlanthanzirkonat (LLZO)-Modifikation kleiner als 12,965 Å ist. Bevorzugt bedeutet dies 12,964 Å oder kleiner. Durch diese Stabilisierung von $Al^{3+}$ in der Lithiumlanthanzirkonat (LLZO)-Struktur, sind nun in überraschender Weise auch überstöchiometrische Mengen an Lithium möglich, ohne dass sich tetragonales Lithiumlanthanzirkonat (LLZO) bildet.

Dieser Effekt ist umso stärker je mehr $La^{3+}$ durch ein oder mehrere dreiwertige Kationen $M^{3+}$, deren Ionenradius kleiner ist als der von $La^{3+}$, ersetzt wird. Jedoch können bei zu hohem Dotierungsgrad unerwünschte schlecht-ionenleitfähige Nebenphasen auftreten, weshalb in der Formel (I) die Menge y an $M^{3+}$ auf $0 < y < 2$, bezogen auf eine Formeleinheit des Aluminium-dotierten Lithiumlanthanzirkonats (LLZO), begrenzt ist.

Daneben kann ein kleiner Teil des $La^{3+}$ optional durch ein oder mehrere zweiwertige Kationen $M^{2+}$ und ein oder mehrere einwertige Kationen $M^{1+}$ ersetzt werden. Dadurch wird jedoch die Zahl der Lithium-Fehlstellen reduziert und es kann sich tetragonales Lithiumlanthanzirkonat (LLZO) bilden. Daher sollte ein zu hoher Anteil von $M^{2+}$ und $M^{1+}$ auf dem Lanthan-Platz vermieden werden und die Summe der ein- und zweiwertigen Kationen $M^{2+}$ und $M^{1+}$ ist daher

auf < 0,2 begrenzt.

Zur Erhöhung der Lithium-Fehlstellenkonzentration kann zusätzlich zur supervalenten Dotierung mit Aluminium auf dem Lithiumplatz auch Zirkonium teilweise durch ein oder mehrere fünfwertige Kationen $M^{5+}$ oder ein oder mehrere sechswertige Kationen $M^{6+}$ ersetzt werden. Dabei sollte die Menge z' an fünfwertigen Kationen kleiner als 0,8, die Menge an sechswertigen Kationen z" kleiner als 0,5, jeweils bezogen auf eine Formeleinheit des Aluminium-dotierten Lithiumlanthanzirkonats (LLZO), sein. Zu viele Fehlstellen im Lithiumuntergitter können zu einer Verminderung der Leitfähigkeit führen als auch die Bildung von Fremdphasen begünstigen (z.B. Pyrochlor). Zudem kann Zirkonium teilweise durch andere vierwertige Kationen $M^{4+}$ ersetzt werden. Dies tritt z.B. durch die Verunreinigung von Zr-Rohstoffen mit $Hf^{4*}$ auf. Es kann aber auch gezielt mit vierwertigen Kationen, wie $Si^{4+}$ und $Ge^{4+}$, auf dem Zirkon-Platz dotiert werden, um beispielsweise die Sintereigenschaften des Materials zu beeinflussen. Dies beeinflusst die Lithium-Fehlstellenkonzentration jedoch nicht.

Die erfindungsmäßige Codotierungsstrategie umfasst daher eine Kombination von sowohl supervalenter Dotierung mit Aluminium auf dem Lithiumplatz als auch isovalenter Dotierung mit einem oder mehreren dreiwertigen Kationen $M^{3+}$ auf dem Lanthanplatz, deren Ionenradius kleiner ist als der von $La^{3+}$, und optional einem oder mehreren einwertigen Kationen $M^{1+}$ und optional einem oder mehreren zweiwertigen Kationen $M^{2+}$ auf dem Lanthanplatz sowie optional einem oder mehreren vierwertigen Kationen $M^{4+}$, optional einem oder mehreren fünfwertigen Kationen $M^{5+}$ und optional einem oder mehreren sechswertigen Kationen $M^{6+}$ auf dem Zirkoniumplatz. Dadurch wird Aluminium-dotiertes Lithiumlanthanzirkonat (LLZO) mit überstöchiometrischem Lithium-Gehalt erhalten und die Stabilität und Bevorzugung der kubischen Modifikation sichergestellt.

Die erfindungsgemäße Codotierungsstrategie sieht die Verwendung der dreiwertigen Kationen $M^{3+}$, deren Ionenradius kleiner als der des $La^{3+}$ ist, als isovalenten Dotierstoff auf dem Lanthanplatz vor. Eine aliovalente Dotierung mit $M^{3+}$ auf dem Zirkoniumplatz ($Zr^{4+}$ -> $M^{3+}$ + $Li^+$) steht der Erzeugung von Lithium-Fehlstellen entgegen und ist somit unerwünscht. Daher wird bevorzugt ein Verhältnis von $(La^{3+} + M^{3+} + M^{2+} + M^{1+})/(Zr^{4+} + M^{6+} + M^{5+} + M^{4+} + M^{3+}) < 1,5$, bevorzugt $(La^{3+} + M^{3+} + M^{2+} + M^{1+})/(Zr^{4+} + M^{6+} + M^{5+} + M^{4+} + M^{3+}) < 1,35$, eingestellt. $M^{3+}$ ist in diesem Verhältnis stets vorhanden und ist daher nicht 0. $M^{1+}$, $M^{2+}$, $M^{4+}$, $M^{5+}$ und $M^{6+}$ sind optional vorhanden und können daher jeweils auch 0 sein. Bevorzugt kann das Verhältnis von $(La^{3+} + M^{3+} + M^{2+} + M^{1+})/(Zr^{4+} + M^{6+} + M^{5+} + M^{4+} + M^{3+})$ im Bereich von 1,49 bis 1,0 liegen, noch bevorzugter im Bereich von 1,35 bis 1,0. In den Beispielen sind Werte und eine Beispielberechnung zu diesem Verhältnis angegeben. Das Verhältnis wird daher auf den angegebenen Wert eingestellt, um bei einer Dotierung auf dem Lanthanplatz die Bildung von Fremdphasen zu vermeiden.

Für die Herstellung größerer Mengen des ionenleitfähigen Granats ist ein Schmelzverfahren das bevorzugte Verfahren. Sol-Gel-Reaktionen und Spray-Pyrolyse sind nachteilig, da diese große Mengen Lösungsmittel verbrauchen. Auch ein Reaktivsintern, d.h. ein Erhitzen unterhalb des Schmelzpunkts der Ausgangskomponenten, ist nachteilig, da durch die große Oberfläche eine stark korrosive $Li_2O$-Atmosphäre erzeugt wird, die das Ofenmaterial und Kontaktmaterialien angreift.

Wenn zur Herstellung ein Schmelzverfahren eingesetzt wird, sollte jedoch berücksichtigt werden, dass lithiumhaltige Schmelzen sehr aggressiv sind, so dass sich ein Erschmelzen im Platin- oder Platin-Rhodium-Tiegel nicht durchführen lässt. Ein Erschmelzen in einem Platin-Tiegel führt zu einem Angriff auf das Tiegelmaterial und im hergestellten Produkt zu eindeutig nachweisbaren Mengen des Edelmetalls. Dies resultiert wiederum im einem deutlichen Anteil elektronischer Leitfähigkeit durch die Edelmetalle, was sich insgesamt nachteilig auswirkt.

Die Herstellung durch Aufschmelzen und Homogenisieren wird daher bevorzugt in einem induktiv beheizten Skull-Tiegel durchgeführt, wodurch die vorstehend erwähnten Nachteile vermieden werden.

Eine weitere Möglichkeit zur schmelztechnischen Herstellung ist die Verwendung eines Glaskohlenstofftiegels. Da diese Tiegel jedoch bei den erforderlichen hohen Temperaturen in sauerstoffhaltiger Atmosphäre oxidiert werden, muss die Herstellung unter Schutzgasatmosphäre (Stickstoff oder Argon) erfolgen. Diese Herstellungsweise ist daher nur für kleinere Mengen sinnvoll, für eine großtechnische Produktion jedoch nachteilig, da dies mit zusätzlichem Kostenaufwand verbunden ist.

Die Erfindung bezieht sich daher auch auf ein Verfahren zur Herstellung eines Aluminium-dotierten Lithiumionenleiters, wobei die Herstellung unter Verwendung eines Schmelzverfahrens, bevorzugt in einem Skull-Tiegel, durchgeführt wird.

Ein Skull-Tiegel ist aus einer Vielzahl von Metallrohren aufgebaut, die von Kühlmittel durchflossen sind, mit schlitzartigen Zwischenräumen zwischen den Metallrohren, und mit einer die Metallrohre von außen umschließenden Induktionsspule, wobei die Metallrohre vorzugsweise miteinander kurzgeschlossen sind. Zur Herstellung über ein Schmelzverfahren, beispielweise durch Erschmelzen und Homogenisieren der Ausgangsstoffe unter Verwendung eines Skull-Tiegels und Abkühlen der Schmelze, entweder durch direktes Erstarren oder eine gezielte kontrollierte Abkühlung oder durch Abschrecken, gefolgt von einer Temperaturbehandlung (Keramisierungsbehandlung) wird auf die DE 199 39 780 A1, die DE 199 39 782 C1 und die DE 10 2014 100 684 A1 verwiesen, deren vollständige Offenbarung hier durch Bezugnahme in die vorliegende Offenbarung einbezogen sein soll.

Über ein Schmelzverfahren hergestellter Aluminium-dotierter Lithiumionenleiter, insbesondere ein Aluminium-dotiertes Lithiumlanthanzirkonat (LLZO), zeichnet sich dadurch aus, dass neben dem kristallinen ionenleitenden Granat auch eine amorphe Phase vorliegen kann, in der Lithium und/oder Aluminium und/oder $M^{3+}$ angereichert sind. Dies hat den Vorteil, dass der Erweichungs- bzw. Schmelzpunkt dieser amorphen Phase niedriger ist als der des Lithiumlanthanzirkonats (LLZO), wodurch die Sintereigenschaften verbessert werden. Dies bedeutet zum Beispiel niedrigere Sintertemperaturen und dichteres Sintern.

Gegenstand der Erfindung ist auch ein Pulver, bestehend aus dem Aluminium-dotierten Lithiumionenleiter gemäß der vorliegenden Erfindung, das eine Korngröße im Bereich von $d_{50} = 0,1~\mu m$ bis $30~\mu m$ aufweist. Die Korngröße wurde mit einem Lasergranulometer (CILAS) bestimmt.

Die vorliegende Erfindung bezieht sich weiterhin auf einen gesinterten Aluminium-dotierten Lithiumionenleiter, bevorzugt hergestellt unter Verwendung des oben angeführten Pulvers, wobei der gesinterte Aluminium-dotierte Lithiumionenleiter eine Lithium-Ionenleitfähigkeit von mehr als $10^{-5}$ S/cm aufweist.

Die vorliegende Erfindung bezieht sich weiterhin auf die Verwendung des Aluminium-dotierten Lithiumionenleiters, bevorzugt in Form eines Pulvers, in Batterien oder Ackumulatoren, bevorzugt Lithium-Batterien oder Lithium-Akkumulatoren, insbesondere Separatoren, Kathoden, Anoden oder Feststoff-Elektrolyten.

Der erfindungsgemäße Aluminium-dotierte Lithiumionenleiter wird, bevorzugt in Form lithiumionenleitender Pulvermaterialien, allein oder zusammen mit weiteren Batteriematerialien verwendet, beispielsweise versintert zu einer rein anorganischen, keramischen Membran, oder als Elektrolyt, eingearbeitet als Füllstoff in einen Polymerelektrolyten bzw. in Polyelektrolyten, in wiederaufladbaren Lithiumionenbatterien, insbesondere in Feststoff-Lithiumionenbatterien (all-solid-state batteries (ASSB)). Einerseits ist dabei der Einsatz als Separator möglich: Zwischen die Elektroden eingebracht, bewahrt er diese vor einem unerwünschten Kurzschluss und stellt dadurch die Funktionsfähigkeit des Gesamtsystems sicher. Dazu kann das entsprechende Komposit entweder als Schicht auf eine oder beide Elektroden aufgebracht oder als freistehende Membran als Festkörperelektrolyt in die Batterie integriert werden. Andererseits ist die Co-Sinterung bzw. Compoundierung mit den Elektrodenmaterialien möglich: In diesem Fall bewerkstelligt der Festkörperelektrolyt den Transport der relevanten Ladungsträger (Litihiumionen und Elektronen) zu den Elektrodenmaterialien und zu den Leitelektroden hin bzw. weg - je nachdem ob die Batterie gerade entladen oder geladen wird.

Als weitere Anwendungen des erfindungsgemäßen Materials ist der Einsatz in Gas-Sensoren und als ionenselektive Membrane bei chemischen Verfahren denkbar.

Die Vorteile der vorliegenden Erfindung sind sehr vielschichtig:
In überraschender Weise wurde festgestellt, dass die kubische Modifikation eines Aluminium-dotierten Lithiumionenleiters auf Basis einer Granatstruktur, bevorzugt einem Aluminium-dotierten Lithiumlanthanzirkonat (LLZO), insbesondere dann erhalten wird, wenn mit mindestens einem dreiwertigen Ion $M^{3+}$ auf dem Lanthanplatz codotiert wird, wobei das dreiwertige Ion $M^{3+}$ einen Ionenradius aufweist, der kleiner ist als der von $La^{3+}$, mit der Maßgabe, dass das dreiwertige Ion $M^{3+}$ nicht allein Yttrium darstellt. Die Dotierung nur mit Aluminium auf dem Lithiumplatz reicht bei überstöchiometrischem Lithiumgehalt zur Stabilisierung der kubischen Modifikation nicht aus, so dass nur in Kombination mit einer isovalenten Dotierung mit einem oder mehreren dreiwertigen Kationen $M^{3+}$ auf dem Lanthanplatz, deren Ionenradius kleiner ist als der von $La^{3+}$, eine ausreichende Stabilisierung der kubischen Modifikation erhalten wird. Nur die kubische Modifikation führt zu einer erwünscht hohen Leitfähigkeit von mehr als $10^{-5}$ S/cm.

Die Dotierung des Lithiumionenleiters auf Basis einer Granatstruktur mit Aluminium ist bedingt durch die geringen Rohstoffkosten sowie die bekannt gute Redoxstabilität im Vergleich zu anderen Elementen von Vorteil. Weiterhin führt die Dotierung von Aluminium auf dem Lithiumplatz zu einer erhöhten Anzahl von Lithium-Fehlstellen (pro $Al^{3+}$ werden zwei Li-Fehlstellen generiert).

Des Weiteren wird ein im Vergleich zu einer stöchiometrischen Granatstruktur höherer Lithiumgehalt im Aluminium-dotierten Lithiumionenleiter auf Basis einer Granatstruktur möglich. Dies ist besonders vorteilhaft, da ein erhöhter Lithium-Gehalt einerseits das Abdampfen von $Li_2O$ bei den hohen Temperaturen während der Herstellung kompensiert und andererseits die Sintereigenschaften des Materials verbessert werden.

Optional können auch noch ein oder mehrere einwertige Kationen $M^{1+}$ (außer $Li^+$) und ein oder mehrere zweiwertige Kationen $M^{2+}$ auf dem Lanthanplatz dotiert werden. Dies verringert jedoch die Lithium-Fehlstellenkonzentration. Daher ist die Summer der einwertigen Kationen $M^{1+}$ (außer $Li^+$) und zweiwertigen Kationen $M^{2+}$ auf kleiner als 0,2, bezogen auf eine Formeleinheit des Aluminium-dotierten Lithiumlanthanzirkonats (LLZO), begrenzt. Vorteilhaft an der Verwendung der einwertigen und auch zweiwertigen Kationen $M^{1+}$ (außer $Li^+$) und $M^{2+}$ ist es, dass hierdurch die Sintereigenschaften verbessert werden können.

Bei der Verwendung von einwertigen Ionen, außer Lithium, werden bevorzugt solche Ionen eingesetzt, die eine geringere Mobilität als das Lithium-Ion aufweisen, also z.B. $K^+$ oder $Cs^+$, um den Einsatz als Lithiumionenleiter in Batterien nicht zu beeinträchtigen.

Bei der Verwendung von zweiwertigen Ionen werden bevorzugt solche Ionen eingesetzt, die nicht polyvalent sind, also z.B. Erdalkali-Kationen, um den Einsatz als Lithiumionenleiter in Batterien nicht zu beeinträchtigen.

Optional können auch noch ein oder mehrere fünfwertige Kationen $M^{5+}$ und ein oder mehrere sechswertige Kationen $M^{6+}$ auf dem Zirkoniumplatz dotiert werden, um die Lithium-Fehlstellenkonzentration zu erhöhen. Zudem kann

ein Teil der $Zr^{4+}$-Kationen durch ein oder mehrere vierwertige Kationen $M^{4+}$, wie $Si^{4+}$ und $Ge^{4+}$, ersetzt werden. Die Lithium-Fehlstellenkonzentration bleibt davon jedoch unbeeinflusst.

Bevorzugt werden für die dreiwertigen Kationen $M^{3+}$ Lanthaniden und Kombinationen aus Lanthaniden und anderen dreiwertigen Kationen, die die Voraussetzung erfüllen, dass sie einen kleineren Ionenradius als $La^{3+}$ aufweisen, verwendet. Ganz besonders bevorzugt ist Gadolinium und die Kombination von Gadolinium und anderen dreiwertigen Kationen, die die Voraussetzung erfüllen, dass sie einen kleineren Ionenradius als $La^{3+}$ aufweisen, beispielsweise Yttrium.

Besonders bevorzugt ist die Verwendung von Gadolinium als dreiwertigem Kation, wobei bevorzugt mindestens 0,1 mol Gadolinium pro Formeleinheit des Aluminium-dotierten Lithiumionenleiters, insbesondere Aluminium-dotierten Lithiumlanthanzirkonats (LLZO), vorliegen. In der chemischen Formel (I) wäre dann für $Gd^{3+}$ y > 0,1, bevorzugt wäre y 0,11 oder größer. Dies ist besonders vorteilhaft, da hierdurch Aluminium als Dotierstoff in der Granatstruktur besonders gut stabilisiert wird, wodurch auch im Fall eines Lithium-Überschusses die kubische Phase erhalten bleibt.

Bei Verwendung des beschriebenen Lithiumionenleiters als Elektrolyt in einer Batterie mit Lithiumanode, ist es bevorzugt, wenn die zur Dotierung auf dem Lanthanplatz verwendeten dreiwertigen Kationen $M^{3+}$ nicht polyvalent sind, d.h. nur dreiwertig vorliegen können. Auch andere Anodenmaterialien können polyvalente Kationen reduzieren.

Erfindungsgemäß wird daher ein völlig anderes Konzept als im Stand der Technik realisiert: Anstelle der üblichen Dotierung mit Ionen anderer Valenz unter direkter Einflussnahme auf die Lithium-Fehlstellenzahl ($V_{Li}$) wird erfindungsgemäß eine Kombination aliovalenter Dotierung und isovalenter Dotierungen durchgeführt, wobei eine Dotierung auf dem Lanthanplatz mit Ionen gleicher Valenz, aber kleinerem Durchmesser, die Änderung der Gittergeometrie in die gewünschte Richtung bewirkt. Diese "Dotierung zweiter Ordnung" führt zu einer Verkleinerung der Elementarzelle der Lithiumlanthanzirkonat (LLZO)-Struktur, die den Einbau von $Al^{3+}$ auf dem Lithiumplatz begünstigt. Je mehr $La^{3+}$ durch ein oder mehrere dreiwertige Kationen $M^{3+}$ mit kleinerem Ionenradius ersetzt werden, umso deutlicher tritt der Effekt hervor; dieser kann aber durch die Bildung nachteiliger Nebenphasen begrenzt werden. Die Menge y an $M^{3+}$ wird daher in Formel (I) auf 0 < y < 2, bezogen auf eine Formeleinheit des Aluminium-dotierten Lithiumlanthanzirkonats (LLZO), begrenzt.

Es gelingt somit durch den gewählten Anteil an kleineren $M^{3+}$-Kationen, die Gitterkonstante a gezielt so einzustellen, d.h. bevorzugt a < 12,965 Å, dass die kubische Modifikation erhalten wird. Diese Stabilisierung von $Al^{3+}$ ermöglicht in unerwarteter Weise die Verwendung von überstöchiometrischen Mengen an Lithium, ohne dass sich die tetragonale Modifikation bildet.

Durch die Codotierung mit einem kleineren Ion auf dem Lanthanplatz wird ferner die Stabilität der kubischen Phase bei einer thermischen Nachbehandlung verbessert, die Bildung unerwünschter Nebenphasen wird nicht beobachtet.

Besonders bevorzugt wird ein Verhältnis von $(La^{3+} + M^{3+} + M^{2+} + M^{1+})/(Zr^{4+} + M^{6+} + M^{5+} + M^{4+} + M^{3+}) < 1,5$, eingestellt, wodurch bei einer Dotierung auf dem Lanthanplatz die Bildung von Fremdphasen vermieden werden kann.

Bevorzugt weist der erfindungsgemäße Aluminium-dotierte Lithiumionenleiter einen im Vergleich zu einer stöchiometrischen Granatstruktur höheren Lithium-Gehalt und ein Verhältnis von kubischer zu tetragonaler Kristallphase von >90 % zu <10% (z.B. 90,1% oder mehr an kubischer Kristallmodifikation zu 9,9% oder weniger an tetragonaler Kristallmodifikation), bevorzugt >95 % zu <5 %(z.B. 95,1% oder mehr an kubischer Kristallmodifikation zu 4,9% oder weniger an tetragonaler Kristallmodifikation), besonders bevorzugt >98 % zu <2 % (z.B. 98,1% oder mehr an kubischer Kristallmodifikation zu 1,9% oder weniger an tetragonaler Kristallmodifikation), auf.

Die Herstellung des Lithiumionenleiters der vorliegenden Erfindung erfolgt bevorzugt über ein Schmelzverfahren. Hierdurch können generell Lösungsmittel vermieden werden. Die Verwendung eines Skull-Tiegels zur Herstellung ist hierbei bevorzugt. Ein über ein Schmelzverfahren hergestellter Aluminium-dotierter Lithiumionenleiter auf Basis einer Granatstruktur, insbesondere ein Aluminium-dotiertes Lithiumlanthanzirkonat (LLZO), weist vorteilhafterweise neben dem kristallinen ionenleitenden Granat auch eine amorphe Phase auf, in der Lithium und/oder Aluminium und/oder $M^{3+}$ angereichert sind.

**Beschreibung der Zeichnungen**

Einige Aspekte in Zusammenhang mit der vorliegenden Erfindung werden anhand der beigefügten Zeichnungen in näheren Einzelheiten beschrieben, ohne die Erfindung hierauf zu beschränken. In den Zeichnungen zeigt:

Figur 1      die Gitterkonstante der kubischen Al-dotierten Lithiumlanthanzirkonat (LLZO)-Modifikation in Abhängigkeit von der Dotierstoffkonzentration an Gadolinium (Gd) und Yttrium (Y); und

Figur 2      übereinander angeordnete Ausschnitte von Röntgenbeugungs-(XRD)-Diffraktogrammen der Beispiele 14, 15, 16 und 18.

In Figur 1 ist die Gitterkonstante in [Å] der kubischen Al-dotierten Lithiumlanthanzirkonat (LLZO)-Modifikation (y-Achse) aufgetragen gegen die Dotierstoffkonzentration in [pfu] an Gadolinium (Gd) und Yttrium (Y) (x-Achse). Bei Ersatz von $La^{3+}$ durch das kleinere $Gd^{3+}$-Ion nimmt die Gitterkonstante linear ab (Vegard'sches Gesetz). Das abweichende Verhalten bei der Yttrium-Dotierung zeigt, dass die gewünschte Verkleinerung der Gitterkonstante durch Yttrium alleine nicht zuverlässig erreicht werden kann.

Um die Yttrium-Dotierung im Einzelnen zu untersuchen, wurden zur Strukturaufklärung XRD-Röntgendiffraktogramme der Zusammensetzungen gemäß der Beispiele 14, 15, 16 und 18 aufgenommen. In Figur 2 sind nun übereinander angeordnete Ausschnitte von 4 XRD-Röntgendiffraktogrammen jeweils der Beispiele 14, 15, 16 und 18 dargestellt. Die Zusammensetzungen der Beispiele sind in der Tabelle 1 angegeben. Die XRDs zeigen die Zunahme der Fremdphase $LiYO_2$ mit steigendem Yttrium-Gehalt in den Beispiele 14, 15, 16 und 18. Die dargestllten Ausschnitte der XRDs bei kleinen Streuwinkeln verdeutlichen, dass mit zunehmendem Yttrium-Gehalt neben der gewünschten kubischen LLZO-Modifikation (durchgezogene Linien) auch vermehrt eine unerwünschte Nebenphase (gestrichelte Linie) auftritt, die als $LiYO_2$ identifiziert wurde. Bei Codotierung von $Gd^{3+}$ mit kleinen Mengen $Y^{3+}$ (Beispiel 18) wird die Bildung dieser Nebenphase nicht beobachtet.

Die Figur 1 zeigt daher, dass beispielsweise Gadolinium (Gd) zur Dotierung auf dem Lanthanplatz besonders gut geeignet ist. Andere Elemente mit kleinerem Ionenradius als das $La^{3+}$-Ion, wie beispielsweise die Lanathaniden führen zu vergleichbar vorteilhaften Ergebnissen. Es gelingt hierdurch die Gitterkonstante in der gewünschten Größe einzustellen, wodurch eine Stabilisierung des Al-dotierten Lithiumlanthanzirkonats (LLZO) in der kubischen Modifikation gezielt erreicht wird. Im Gegensatz hierzu zeigen die Figuren 1 und 2, dass Yttrium allein hierzu nicht geeignet ist und daher die alleinige Verwendung von Yttrium von der erfindungsgemäßen Lehre ausgenommen wurde.

Nachfolgend wird die vorliegende Erfindung anhand von Beispielen näher erläutert, ohne diese hierauf zu beschränken.

### Ausführungsbeispiele

Nachfolgend sind in Tabelle 1 Zusammensetzungsbeispiele mit dem Anteil an Lithiumlanthanzirkonat (LLZO) in der kubischen Modifikation, bezogen auf die Gesamtmenge an Lithiumlanthanzirkonat (LLZO), angegeben. Die Zusammensetzung ist als Atome pro Formeleinheit (pfu) des Aluminuim-dotierten Lithiumlanthanzirkonats (LLZO) angegeben. Der Anteil an Lithiumlanthanzirkonat (LLZO) in der kubischen Modifikation wurde per Rietveld-Auswertung aus den XRD-Daten bestimmt und ist angegeben als:

$$LLZO_{kubisch} / LLZO_{tetragonal} + LLZO_{kubisch,}$$

wobei die Auswertung in Gew.-% erfolgte.

**Tabelle 1:**

| Bsp. | Li+ | Al3+ | La3+ | Gd3+ | Y3+ | Zr4+ | Hf4+ | Si4+ | Ta5+ | Ba2+ | Sr2+ | K+ | $(La^{3+} + M^{3+} + M^{2+} + M^{1+})/(Zr^{4+} + M^{6+} + M^{5+} + M^4{}_+ + M^{3+})$ | Anteil kubisches LLZO [Gew.-%] | Leitfähigkeit [S/cm] |
|---|---|---|---|---|---|---|---|---|---|---|---|---|---|---|---|
| 1* | 6,4 | 0,2 | 3 | | | 2 | | | | | | | 1,50 | 100,0 | 1,4E-04 |
| 2* | 6,4 | 0,2 | 3 | | | 1,96 | | | 0,04 | | | | 1,50 | 100,0 | 8,9E-05 |
| 3* | 6,6 | 0,2 | 3 | | | 2 | | | | | | | 1,50 | 70,1 | 8,4E-05 |
| 4* | 6,6 | 0,2 | 2,8 | | | 2 | | | | | 0,2 | | 1,50 | 29,5 | 3,0E-5 |
| 5* | 6,4 | 0,2 | 2,2 | 0,8 | | 2 | | | | | | | 1,07 | 100,0 | 2,8E-05 |
| 6* | 6,4 | 0,2 | 2,73 | 0,27 | | 2 | | | | | | | 1,32 | 100,0 | 8,8E-05 |
| 7* | 6,4 | 0,2 | 2,4 | 0,6 | | 2 | | | | | | | 1,15 | 100,0 | 4,2E-05 |
| 8 | 6,8 | 0,2 | 2,4 | 0,6 | | 2 | | | | | | | 1,15 | 100,0 | 9,0E-05 |
| 9 | 7,6 | 0,2 | 2,2 | 0,8 | | 2 | | | | | | | 1,07 | 100,0 | 6,4E-05 |
| 10 | 7,2 | 0,2 | 2,1 | 0,9 | | 2 | | | | | | | 1,03 | 100,0 | 7,8E-05 |
| 11 | 6,8 | 0,4 | 2,7 | 0,3 | | 2 | | | | | | | 1,30 | 100,0 | 6,3E-5 |
| 12 | 7,2 | 0,4 | 2,7 | 0,3 | | 1,97 | | 0,03 | | | | | 1,30 | 100,0 | 1,0E-04 |
| 13* | 7,2 | 0,15 | 2,8 | | 0,2 | 2 | | | | | | | 1,36 | 40,0 | 3,8E-05 |
| 14* | 6,8 | 0,2 | 2,7 | | 0,3 | 2 | | | | | | | 1,30 | 100,0 | 1,0E-04 |
| 15* | 7 | 0,2 | 2,6 | | 0,4 | 2 | | | | | | | 1,25 | 100,0 | 1,2E-04 |
| 16* | 7 | 0,2 | 2,5 | | 0,5 | 2 | | | | | | | 1,20 | 100,0 | 1,0E-04 |
| 17 | 7 | 0,2 | 2,7 | 0,25 | 0,05 | 1,99 | | 0,01 | | | | | 1,30 | 100,0 | 7,9E-5 |
| 18 | 6,7 | 0,2 | 2,7 | 0,25 | 0,05 | 2 | | | | | | | 1,30 | 100,0 | 2,5E-4 |
| 19 | 7 | 0,3 | 2,7 | 0,25 | 0,05 | 2 | | | | | | | 1,30 | 100,0 | 1,5E-4 |
| 20 | 6,7 | 0,15 | 2,7 | 0,25 | 0,05 | 1,98 | 0,02 | | | | | | 1,30 | 100,0 | 1,5E-4 |
| 21 | 6,7 | 0,2 | 2,68 | 0,25 | 0,05 | 1,99 | | 0,01 | | 0,02 | | | 1,30 | 100,0 | n.b. |
| 22 | 7,5 | 0,4 | 2,60 | 0,3 | 0,05 | 1,97 | | 0,03 | | | | 0,05 | 1,28 | 100,0 | 5,3E-5 |

* ...... nicht erfindungsgemäße Beispiele

Die Beispiele 8 bis 12 und 17 bis 22 sind erfindungsgemäß.

In Tabelle 1 sind beispielhafte Zusammensetzungen und der entsprechende Anteil Lithiumlanthanzirkonat (LLZO) in der kubischen Modifikation (bestimmt durch Rietveld-Analyse der XRD-Daten, bezogen auf den Gesamtanteil Lithiumlanthanzirkonat (LLZO)) dargestellt. Die Beispiele 1 bis 7 und 13 bis 16 sind nicht erfindungsgemäß: In den Beispielen 1 bis 4 wird der Lanthanplatz nicht durch ein weiteres kleineres dreiwertiges Kation $M^{3+}$ codotiert. In den Beispielen 5 bis 7 liegt das Lithium in stöchiometrischer Menge vor. In den Beispielen 13 bis 16 wird allein mit Yttrium codotiert, wobei die alleinige Dotierung mit Yttrium als $M^{3+}$ erfindungsgemäß ausgeschlossen ist, da es in niedriger Menge die Stabilisierung der kubischen Modifikation nicht gewährleisten kann (Beispiel 13) bzw. in höherer Konzentration zwar die kubische Modifikation stabilisiert, gleichzeitig aber die Bildung von unerwünschten Nebenphasen bewirkt (Beispiele 14-16, bzw. Figur 2).

Die Rohstoffe wurden entsprechend der Zusammensetzungen gemäß Tabelle 1 gemischt und in einen nach oben offenen Skull-Tiegel gefüllt. Das Gemenge musste zunächst vorgeheizt werden, um eine gewisse Mindestleitfähigkeit zu erreichen. Hierzu wurde eine Brennerbeheizung verwendet. Nach Erreichen der Kopplungstemperatur wurde das weitere Aufheizen und Homogenisieren der Schmelze durch Hochfrequenz-Einkopplung über eine Induktionsspule erreicht. Um die Homogenisierung der Schmelzen zu verbessern, wurde mit einem wassergekühlten Rührer gerührt. Nach vollständiger Homogenisierung wurden Direktproben aus der Schmelze entnommen (schnelle Kühlung), während der Rest der Schmelze durch Abschalten der Hochfrequenz langsam abgekühlt wurde.

Das auf diesem Wege hergestellte Material kann entweder durch direktes Erstarren aus der Schmelze oder durch Abschrecken, gefolgt von einer Temperaturbehandlung (Keramisierung) in ein glaskeramisches Material mit granatartiger Hauptkristallphase überführt werden. Die aus der Schmelze direkt entnommenen Proben zeigten unabhängig von der Kühlung eine spontane Kristallisation, so dass auf eine nachgeschaltete Keramisierungsbehandlung verzichtet werden konnte. Aus den so erhaltenen Glaskeramiken wurden Proben für die Impedanzspektroskopie zur Bestimmung der Leitfähigkeit, sowie für Röntgenbeugungsuntersuchungen (XRD) hergestellt. Um eine Degradation der Proben in Wasserkontakt zu vermeiden, wurde die Probenpräparation wasserfrei durchgeführt.

Das Verhältnis von $(La^{3+} + M^{3+} + M^{2+} + M^{1+})/(Zr^{4+} + M^{6+} + M^{5+} + M^{4+} + M^{3+}) < 1,5$ ist in den Beispielen 5 bis 22 erfüllt, wobei davon jedoch nur die Beispiele 8 bis 12 und 17 bis 22 gemäß der vorliegenden Erfindung sind. Im Einzelnen wird das Verhältnis wie folgt berechnet:

Anhand von Beispiel 11 soll dies im Einzelnen erläutert werden:

$La^{3+}$ = 2,7 pfu
$M^{3+}$: Gd = 0,3 pfu
$Zr^{4+}$= 2 pfu
$M^{6+}$, $M^{5+}$, $M^{4+}$, $M^{2+}$, $M^{1+}$ ist nicht vorhanden, daher $M^{6+} = M^{5+} = M^{4+} = M^{2+} = M^{1+}$ = 0 pfu

Dies ergibt dann: (2,7 pfu + 0,3 pfu + 0 pfu+ 0 pfu)/(2 pfu + 0 pfu + 0 pfu + 0 pfu + 0,3 pfu) = (3 pfu)/(2,3 pfu) = 1,30

Zu den oben angegebenen Beispielen 1 bis 22 können folgende Erläuterungen gegeben werden: Die stöchiometrische Lithiumlanthanzirkonat-(LLZO)-Zusammensetzung in Beispiel 1 führt zur Bildung von 100% kubischem Lithiumlanthanzirkonat (LLZO). Dabei zeigt Beispiel 2, dass bei zusätzlicher Dotierung mit einem fünfwertigen Kation auf dem Zr-Platz die kubische Struktur erhalten bleibt. Jedoch hat schon eine kleine Erhöhung des Lithium-Gehalts (von 6,4 auf 6,6 pfu) ein Absinken des Gehalts an kubischem Lithiumlanthanzirkonat (LLZO) auf 70,1 Gew.-% zur Folge (s. Beispiel 3). Es treten daher die erläuterten Effekte auf, wonach ein erhöhter Li-Gehalt dazu führt, dass der Dotierstoff Aluminium teilweise wieder aus der Kristallstruktur verdrängt wird, so dass das kubische Lithiumlanthanzirkonat (LLZO) nicht mehr ausreichend bei Raumtemperatur stabilisiert wird.

Der Zusatz von zweiwertigen Kationen $M^{2+}$ führt bereits bei stöchiometrischem Lithium-Gehalt zur Bildung der unerwünschten tetragonalen Modifikation (vgl. Beispiel 4).

Die Beispiele 5 bis 12 sind Zusammensetzungen mit Gadolinium- und Aluminium-Dotierung. Bei stöchiometrischer Zusammensetzung (Beispiel 5 bis 7) wird die kubische Modifikation unabhängig von der Menge an Gadolinium erhalten.

Jedoch ist es aufgrund einer isovalenten Codotierung auf dem Lanthanplatz, wie in den erfindungsgemäßen Beispielen 8 bis 12 anhand der Gadolinium-Codotierung gezeigt, nunmehr in unerwarteter Weise möglich, auch bei überstöchiometrischem Lithium-Gehalt die kubische Modifikation zu erhalten.

Dabei kann sowohl der Aluminium-Gehalt variiert werden (Beispiele 11 und 12), als auch zusätzlich auf dem Zirkoniumplatz dotiert werden, ohne dass die unerwünschte tetragonale Modifikation des Lithiumlanthanzirkonats (LLZO) erhalten wird.

Die Beispiele 13-16 sind Zusammensetzungen mit Yttrium- und Aluminium-Dotierung. Ist die Menge an Yttrium zu gering (Beispiel 13) wird nur teilweise kubisches Lithiumlanthanzirkonat (LLZO) erhalten. Bei höherem Yttriumgehalt zeigt sich auch hier der Effekt, dass trotz überstöchiometrischem Li-Gehalt die kubische Modifikation von Lithiumlanthanzirkonat (LLZO) erhalten wird (Beispiele 14 bis 16). Jedoch tritt bei diesen Yttriumgehalten vermehrt die Bildung von unerwünschten Nebenphasen auf (s. Figur 2).

Die Beispiele 17 bis 20 sind Zusammensetzungen mit Gadolinium-, Yttrium- und Aluminium-Dotierung. In allen Beispielen wird trotz überstöchiometrischem Li-Gehalt die kubische Modifikation von Lithiumlanthanzirkonat (LLZO) erhalten. Durch den niedrigeren Yttriumgehalt treten jedoch keine unerwünschten Nebenphasen auf (s. Figur 2). Dabei kann sowohl der Lithiumgehalt (vgl. Beispiele 17 und 18) als auch der Aluminiumgehalt (vgl. Beispiel 17 und 19) variiert werden, ohne dass sich trotz überstöchiometrischem Li-Gehalt die tetragonale Modifikation des Lithiumlanthanzirkonats (LLZO) bildet. Zudem können kleine Mengen des Zirkoniums substituiert werden (Beispiele 17 und 20).

Die Beispiele 21 und 22 sind Zusammensetzungen mit Gadolinium- (bzw. Gadolinium- und Yttrium-) und Aluminium-Dotierung, die zusätzlich geringe Mengen an zweiwertigen Kationen M²⁺ (Beispiel 21) und einwertigen Kationen M¹⁺ (Beispiel 22) auf dem Lanthanplatz enthalten. Solche Co-Dotierungen mit subvalenten Kationen führen bei Aluminium-dotiertem Lithiumlanthanzirkonat (LLZO) bereits bei stöchiometrischem Lithiumgehalt zur Bildung der unerwünschten tetragonalen Modifikation des Lithiumlanthanzirkonats (LLZO) (Beispiel 4). Durch die Codotierung mit Gadolinium bzw. Gadolinium und Yttrium auf dem Lanthanplatz unterbleibt die Bildung der unerwünschten tetragonalen Modifikation des Lithiumlanthanzirkonats (LLZO) nunmehr in unerwarteter Weise.

**Patentansprüche**

1. Aluminium-dotierter Lithiumionenleiter auf Basis einer Granatstruktur, umfassend Lanthan, insbesondere ein Aluminium-dotiertes Lithiumlanthanzirkonat (LLZO), wobei dieser/dieses mit mindestens einem dreiwertigen Ion $M^{3+}$ auf dem Lanthanplatz codotiert ist, wobei das dreiwertige Ion $M^{3+}$ einen Ionenradius aufweist, der kleiner ist als der von $La^{3+}$, und ein im Vergleich zu einer stöchiometrischen Granatstruktur höherer Lithium-Gehalt vorliegt, mit der Maßgabe, dass, wenn $M^{3+}$ Yttrium darstellt, ein weiteres dreiwertiges Ion $M^{3+}$, welches von $Y^{3+}$ verschieden ist und einen Ionenradius aufweist, der kleiner ist als der von $La^{3+}$, auf dem Lanthanplatz codotiert ist.

2. Aluminium-dotierter Lithiumionenleiter nach Anspruch 1 mit der allgemeinen chemischen Formel:

$$\text{Li}_{7-3x+y'+2y''-z'-2z''+u}\text{Al}_x^{3+}\text{La}_{3-y-y'-y''}\text{M}_y^{3+}\ \text{M}_{y'}^{2+}\ \text{M}_{y''}^{1+}\text{Zr}_{2-z-z'-z''}\text{M}_z^{4+}\ \text{M}_{z'}^{5+}\ \text{m}_{z''}^{6+}\ \text{O}_{12\pm\delta} \qquad (I)$$

wobei

$M^{3+}$: ein oder mehrere dreiwertige Kationen mit einem Ionenradius kleiner als $La^{3+}$, außer $Al^{3+}$, darstellt,
$M^{2+}$: ein oder mehrere zweiwertige Kationen darstellt,
$M^{1+}$: ein oder mehrere einwertige Kationen, außer $Li^+$, darstellt,
$M^{4+}$: ein oder mehrere vierwertige Kationen, außer $Zr^{4+}$, darstellt,
$M^{5+}$: ein oder mehrere fünfwertige Kationen darstellt,
$M^{6+}$: ein oder mehrere sechswertige Kationen darstellt,

$0,1 \leq x < 1$
$0 < y < 2$
$0 \leq y' < 0,2$
$0 \leq y'' < 0,2$
$0 \leq y'+y'' < 0,2$
$0 \leq z < 0,5$
$0 \leq z' < 0,8$
$0 \leq z'' < 0,5$
$0 \leq \delta < 2$,
wobei

$u > 0$ für einen überstöchiometrischen Lithiumgehalt ist, bevorzugt $u \geq 0,2$,
mit der Maßgabe, dass, wenn $M^{3+}$ Yttrium darstellt, ein weiteres dreiwertiges Ion $M^{3+}$, welches von $Y^{3+}$ verschieden ist und einen Ionenradius aufweist, der kleiner ist als der von $La^{3+}$, auf dem Lanthanplatz codotiert ist.

3. Aluminium-dotierter Lithiumionenleiter nach Anspruch 2,
**dadurch gekennzeichnet,**
**dass** gilt: $0,1 \leq x < 0,5$, noch bevorzugter $0,14 \leq x < 0,5$, jeweils bezogen auf eine Formeleinheit des Aluminium-dotierten Lithiumionenleiters auf Basis einer Granatstruktur in der Formel (I).

4. Aluminium-dotierter Lithiumionenleiter nach einem der Ansprüche 1 bis 3,
   **dadurch gekennzeichnet,**
   **dass** die Menge an $Y^{3+}$ < 0,2 pro Formeleinheit des Aluminium-dotierten Lithiumionenleiters auf Basis einer Granatstruktur beträgt.

5. Aluminium-dotierter Lithiumionenleiter nach einem der Ansprüche 1 bis 4,
   **dadurch gekennzeichnet,**
   **dass** das Verhältnis von $(La^{3+} + M^{3+} + M^{2+} + M^{1+})/(Zr^{4+} + M^{6+} + M^{5+} + M^{4+} + M^{3+})$ < 1,5, bevorzugt das Verhältnis von $(La^{3+} + M^{3+} + M^{2+} + M^{1+})/(Zr^{4+} + M^{6+} + M^{5+} + M^{4+} + M^{3+})$ < 1,35 vorliegt,
   wobei $M^{3+}$ nicht Null ist, aber $M^{6+}$, $M^{5+}$, $M^{4+}$, $M^{2+}$ und $M^{1+}$ jeweils Null sein können.

6. Aluminium-dotierter Lithiumionenleiter nach einem der Ansprüche 1 bis 5,
   **dadurch gekennzeichnet,**
   **dass** das Verhältnis von $(La^{3+} + M^{3+} + M^{2+} + M^{1+})/(Zr^{4+} + M^{6+} + M^{5+} + M^{4+} + M^{3+})$ im Bereich von 1,49 bis 1,0, bevorzugt im Bereich von 1,35 bis 1,0 liegt.

7. Aluminium-dotierter Lithiumionenleiter nach einem der Ansprüche 1 bis 6,
   **dadurch gekennzeichnet,**
   **dass** das oder die dreiwertigen Kationen $M^{3+}$ ausgewählt ist/sind aus der Gruppe, bestehend aus Cer, Praseodym, Neodym, Promethium, Samarium, Europium, Gadolinium, Terbium, Dysprosium, Holmium, Erbium, Thulium, Ytterbium, Lutetium, Yttrium, Scandium, Bismut und Indium und bevorzugt ausgewählt ist aus Gadolinium, Niob und Yttrium, ganz besonders bevorzugt eine Kombination von Gadolinium und einem weiteren dreiwertigen Kation, insbesondere Yttrium, darstellt.

8. Aluminium-dotierter Lithiumionenleiter nach einem der Ansprüche 1 bis 7,
   **dadurch gekennzeichnet,**
   **dass** eines der dreiwertigen Kationen $M^{3+}$ Gadolinium darstellt und mindestens 0,1 mol Gadolinium pro Formeleinheit des Aluminium-dotierten Lithiumionenleiters auf Basis einer Granatstruktur vorliegen.

9. Aluminium-dotierter Lithiumionenleiter nach einem der Ansprüche 1 bis 8,
   **dadurch gekennzeichnet,**
   **dass** dieser eine Gitterkonstante von a < 12,965 Å aufweist.

10. Aluminium-dotierter Lithiumionenleiter nach einem der Ansprüche 1 bis 9,
    **dadurch gekennzeichnet,**
    **dass** das dreiwertige Kation $M^{3+}$ nicht polyvalent ist.

11. Aluminium-dotierter Lithiumionenleiter nach einem der Ansprüche 1 bis 10,
    **dadurch gekennzeichnet,**
    **dass** dieser eine amorphe Phase aufweist, in der Lithium und/oder Aluminium und/oder $M^{3+}$ angereichert sind.

12. Aluminium-dotierter Lithiumionenleiter nach einem der Ansprüche 1 bis 11,
    **dadurch gekennzeichnet,**
    **dass** er einen im Vergleich zu einer stöchiometrischen Granatstruktur höheren Lithium-Gehalt aufweist und ein Verhältnis von kubischer zu tetragonaler Kristallphase von >90 % zu <10%, bevorzugt >95 % zu <5 %, besonders bevorzugt >98 % zu <2 %, aufweist.

13. Pulver, bestehend aus dem Aluminium-dotierten Lithiumionenleiter nach einem der Ansprüche 1 bis 12, das eine Korngröße im Bereich von $d_{50}$ = 0,1 $\mu$m bis 30 $\mu$m aufweist.

14. Gesinterter Aluminium-dotierter Lithiumionenleiter nach einem der Ansprüche 1 bis 12 oder 13, der eine Ionenleitfähigkeit von mehr als $10^{-5}$ S/cm aufweist.

15. Verfahren zur Herstellung eines Aluminium-dotierten Lithiumionenleiters nach einem der Ansprüche 1 bis 12,
    **dadurch gekennzeichnet,**
    **dass** das Verfahren unter Verwendung eines Schmelzverfahrens, bevorzugt in einem Skull-Tiegel, durchgeführt wird.

16. Verwendung des Aluminium-dotierten Lithiumionenleiters oder des Pulvers nach einem der Ansprüche 1 bis 14 in Batterien, Kondensatoren oder Akkumulatoren, bevorzugt Lithium-Batterien oder Lithium-Akkumulatoren, insbesondere Separatoren, Kathoden, Anoden oder Feststoff-Elektrolyten.

## Fig.1

Fig. 2

**Europäisches Patentamt**
**European Patent Office**
**Office européen des brevets**

## EUROPÄISCHER RECHERCHENBERICHT

Nummer der Anmeldung

EP 20 21 4458

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 110 128 140 A (UNIV INNER MONGOLIA TECHNOLOGY) 16. August 2019 (2019-08-16)<br><br>* Abbildung 4 *<br>* Beispiele 1-8 *<br>* Absätze [0007], [0094], [0095] *<br>----- | 1,4, 7-11,13, 14,16 | INV.<br>H01M10/0525<br>C01G25/02<br>H01M10/0562<br>H01M4/62<br>H01G11/00 |
| X | CN 105 778 915 A (UNIV XIAMEN) 20. Juli 2016 (2016-07-20)<br>* Ausführungsform 1 *<br>* Abbildung 1 *<br>* Absätze [0016], [0051] *<br>----- | 1,4-7,10 | |
| A | CN 102 867 986 B (UNIV NINGBO) 15. Juli 2015 (2015-07-15)<br>* Absätze [0008], [0009] *<br>----- | 1-16 | |

**RECHERCHIERTE SACHGEBIETE (IPC)**

H01M
C01G
H01G

Der vorliegende Recherchenbericht wurde für alle Patentansprüche erstellt

| Recherchenort | Abschlußdatum der Recherche | Prüfer |
|---|---|---|
| München | 21. Mai 2021 | Gregori, Giuliano |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..................................................................................
& : Mitglied der gleichen Patentfamilie, übereinstimmendes Dokument

EPO FORM 1503 03.82 (P04C03)

EP 3 905 409 A1

**ANHANG ZUM EUROPÄISCHEN RECHERCHENBERICHT
ÜBER DIE EUROPÄISCHE PATENTANMELDUNG NR.**

EP 20 21 4458

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2021

| Im Recherchenbericht angeführtes Patentdokument | Datum der Veröffentlichung | Mitglied(er) der Patentfamilie | Datum der Veröffentlichung |
|---|---|---|---|
| CN 110128140 A | 16-08-2019 | KEINE | |
| CN 105778915 A | 20-07-2016 | KEINE | |
| CN 102867986 B | 15-07-2015 | KEINE | |

Für nähere Einzelheiten zu diesem Anhang : siehe Amtsblatt des Europäischen Patentamts, Nr.12/82

22

# EP 3 905 409 A1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102014100684 A1
- EP 2159867 A1
- JP 2013134852 A
- JP 2013149493 A
- CN 107732298 A
- JP 2018195483 A
- US 2011244337 A1
- DE 102011079401 A1
- WO 2019055730 A1
- US 2016268630 A1
- JP 2012031025 A
- EP 3518251 A1
- CN 106129463
- US 2018013171 A1
- US 2019006707 A1
- CN 109888374 A
- CN 107768715 A
- EP 3459920 A1
- DE 19939780 A1
- DE 19939782 C1

### In der Beschreibung aufgeführte Nicht-Patentliteratur

- *Angew. Chem. Int. Ed.,* 2007, vol. 46, 7778-7781
- **GU W. ; EZBIRI M. ; PRASADA RAO R. ; AVDEEV M. ; ADAMS S.** Effects of penta- and trivalent dopants on structure and conductivity of Li7La3Zr2O. *Solid State Ionics,* 2015, vol. 274, 100-105
- **OHTA S. ; KOBAYASHI T. ; ASAOKA T.** High lithium ionic conductivity in the garnet-type oxide Li7-xLa3(Zr2-xNbx)O12 (x = 0-2). *J. Power Sources,* 2011, vol. 196, 3342-3345
- **DHIVYA L. ; JANANI N. ; PALANIVEL B. ; MURUGAN R.** Li+ transport properties of W substituted Li7La3Zr2O12 cubic lithium garnets. *AIP Advances,* 2013, vol. 3, 082115
- **RAMAKUMAR S. ; SATYANARAYANA L. ; MANORAMA S. V. ; MURUGAN R.** Structure and Li+ dynamics of Sbdoped Li7La3Zr2O12 fast lithium ion conductors. *Phys. Chem. Chem. Phys.,* 2013, vol. 15, 11327-11338
- **DEVIANNAPOORANI C. ; DHIVYA L. ; RAMAKUMAR S. ; MURUGAN R.** Lithium ion transport properties of high conductive tellurium substituted Li7La3Zr2O12 cubic lithium garnets. *Journal of Power Sources,* 2013, vol. 240, 18-25
- **WANG Y. ; LAI W.** High Ionic Conductivity Lithium Garnet Oxides of Li7-xLa3Zr2-xTaxO12 Compositions. *Electrochem. Solid-State Lett.,* 2012, vol. 15, 68-71
- **WU J.-F. ; CHEN E.-Y. ; YU Y. ; LIU L. ; WU Y. ; PANG W. K. ; PETERSON V. K. ; GUO X.** Gallium-Doped Li7La3Zr2O12 Garnet-Type Electrolytes with High Lithium-Ion Conductivity. *ACS Appl. Mater. Interfaces,* 2017, vol. 9, 1542-1552
- **RANGASAMY E. ; WOLFENSTINE J. ; SAKAMOTO J.** The role of Al and Li concentration on the formation of cubic garnet solid electrolyte of nominal composition Li7La3Zr2O. *Solid State Ionics,* 2012, vol. 206, 28-32
- **SHANNON, R. D.** Revised effective ionic radii and systematic studies of interatomic distances in halides and chalcogenides. *Acta Cryst.,* 1976, vol. 32, 751-767